# EUROPEAN PATENT APPLICATION

(11) **EP 4 608 045 A1**
(43) Date of publication of application: **27.08.2025**
(21) Application number: 24738698.0
(22) Date of filing: 03.01.2024
(51) Int. Cl.: H04W 74/04, H04W 72/50, H04L 5/00, H04W 76/15, H04W 84/12, H04W 74/08, H04L 1/18

(54) **METHOD AND DEVICE FOR RESOURCE USAGE IN WIRELESS LAN SUPPORTING MLSR**

(30) Priority: 04.01.2023 KR 20230001454; 02.03.2023 KR 20230028097
(71) Applicant: Hyundai Motor Company, Seoul 06797 (KR); Kia Corporation, Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR); MOON, Ju Seong, Osan-si, Gyeonggi-do 18101 (KR)
(74) Representative: Isarpatent
(86) International application number: PCT/KR2024/000098
(87) International publication number: WO 2024/147628

(57) **Abstract**

Disclosed here are a method and apparatus for using a resource in a wireless local area network supporting MLSR. A method of a first STA comprises operating in a listening state on a first link, receiving an initial control frame from a first AP on the first link, transitioning an operation state of the first STA from the listening state to a normal transmit/receive state after receiving the initial control frame, determining whether one or more state maintenance conditions are satisfied for a preset time, and maintaining or transitioning the operation state of the first STA based on whether the one or more state maintenance conditions are satisfied.

## Description

### Technical Field

The present disclosure related to a wireless local area network communication technology, and more particularly, to a technology of using a resource in a wireless local area network supporting multi-link single radio (MLSR).

### Background Art

Recently, as the spread of mobile devices expands, a wireless local area network technology capable of providing fast wireless communication services to mobile devices is in the spotlight. The wireless local area network (LAN) technology may be a technology that supports mobile devices such as smart phones, smart pads, laptop computers, portable multimedia players, embedded devices, and the like to wirelessly access the Internet based on wireless communication technology.

The standards using the wireless LAN technology are being standardized as IEEE 802.11 standards mainly in the Institute of Electrical and Electronics Engineers (IEEE). As the above-described wireless LAN technology has been developed and spread, applications using the wireless LAN technology has been diversified, and a demand for a wireless LAN technology supporting a higher throughput has arisen.

As applications requiring higher throughput and applications requiring real-time transmission occur, wireless LAN may support communication using an expanded frequency bandwidth and an efficient retransmitting operation. In addition, wireless LAN may support an operation of simultaneously using a plurality of channels or a plurality of links. In other words, wireless LAN may support multi-link transmission. In this case, methods for supporting efficient multi-link transmission may be needed.

Meanwhile, the technologies that are described in the Background section are written to improve the understanding of the background of the present disclosure and may include content that is not already known to those of ordinary skill in the art to which the present disclosure belongs.

### Disclosure

### Technical Problem

To solve the above problem, the present disclosure is directed to providing a method and apparatus for using a resource in a wireless LAN supporting multi-link single radio (MLSR).

### Technical Solution

A method of a first STA according to embodiments of the present disclosure for achieving the above-described objective may comprise operating in a listening state on a first link, receiving an initial control frame from a first AP on the first link, transitioning an operation state of the first STA from the listening state to a normal transmit/receive state after receiving the initial control frame, determining whether one or more state maintenance conditions are satisfied for a preset time, and maintaining or transitioning the operation state of the first STA based on whether the one or more state maintenance conditions are satisfied.

The one or more state maintenance conditions may include at least one of a first condition or a second condition, the first condition may be a "condition that the first STA receives a frame from another communication node", and the second condition may be a "condition that a frame to be transmitted to the another communication node occurs in the first STA".

The one or more state maintenance conditions may include at least one of a first condition or a second condition, the first condition may mean that "PHY-RXSTART.indication primitive occurs in a PHY layer of the first STA", and the second condition may mean that "a MAC layer of the first STA delivers PHY-TXSTART.request primitive to the PHY layer of the first STA and the PHY layer of the first STA delivers PHY-TXSTART.confirm primitive to the MAC layer as a response to the PHY-TXSTART.request primitive".

When the one or more state maintenance conditions are satisfied, the first STA may maintain the normal transmit/receive state, and when the one or more state maintenance conditions are not satisfied, the first STA may transition the operation state from the normal transmit/receive state to the listening state.

The initial control frame may indicate TXOP sharing, and the first STA operating in the normal transmit/receive state may perform communication within a shared TXOP according to the TXOP sharing.

When a mode of the TXOP sharing is a TXOP sharing mode 1, the first STA may perform communication with the first AP within the shared TXOP, and when the mode of the TXOP sharing is a TXOP sharing mode 2, the first STA may perform communication with at least one of the first AP or another STA within the shared TXOP.

The method of the first STA may further comprise receiving an MU-RTS frame indicating TXOP sharing from the first AP in the normal transmit/receive state, and the first STA operating in the normal transmit/receive state may perform communication within a shared TXOP according to the TXOP sharing.

The method of the first STA may further comprise transmitting a CTS frame to the first AP as a response to the initial control frame on the first link, and the preset time may start from a transmission end time of the CTS frame.

The preset time may be aSIFSTime + aSlotTime + aRxPHYStartDelay.

In the listening state, the first STA may perform a listening operation to receive a frame on one or more EMLSR links, and in the normal transmit/receive state, the first STA may perform communication on one link.

A first STA according to embodiments of the present disclosure for achieving the above-described objective may comprise at least one processor, and the at least one processor may cause the first STA to operate in a listening state on a first link, to receive an initial control frame from a first AP on the first link, to transition an operation state of the first STA from the listening state to a normal transmit/receive state after receiving the initial control frame, to determine whether one or more state maintenance conditions are satisfied for a preset time, and to maintain or transition the operation state of the first STA based on whether the one or more state maintenance conditions are satisfied.

The one or more state maintenance conditions may include at least one of a first condition or a second condition, the first condition may be a "condition that the first STA receives a frame from another communication node", and the second condition may be a "condition that a frame to be transmitted to the another communication node occurs in the first STA".

The one or more state maintenance conditions may include at least one of a first condition or a second condition, the first condition may mean that "PHY-RXSTART.indication primitive occurs in a PHY layer of the first STA", and the second condition may mean that "an MAC layer of the first STA delivers PHY-TXSTART.request primitive to the PHY layer of the first STA and the PHY layer of the first STA delivers PHY-TXSTART.confirm primitive to the MAC layer as a response to the PHY-TXSTART.request primitive".

When the one or more state maintenance conditions are satisfied, the first STA may maintain the normal transmit/receive state, and when the one or more state maintenance conditions are not satisfied, the first STA may transition the operation state from the normal transmit/receive state to the listening state.

The initial control frame may indicate TXOP sharing, and the first STA operating in the normal transmit/receive state may perform communication within a shared TXOP according to the TXOP sharing.

When a mode of the TXOP sharing is a TXOP sharing mode 1, the first STA may perform communication with the first AP within the shared TXOP, and when the mode of the TXOP sharing is a TXOP sharing mode 2, the first STA may perform communication with at least one of the first AP or another STA within the shared TXOP.

The at least one processor may further cause the first STA to receive an MU-RTS frame indicating TXOP sharing from the first AP in the normal transmit/receive state, and the first STA operating in the normal transmit/receive state may perform communication within a shared TXOP according to the TXOP sharing.

The at least one processor may further cause the first STA to transmit a CTS frame to the first AP as a response to the initial control frame on the first link, and the preset time may start from a transmission end time of the CTS frame.

The preset time may be aSIFSTime + aSlotTime + aRxPHYStartDelay.

In the listening state, the first STA may perform a listening operation to receive a frame on one or more EMLSR links, and in the normal transmit/receive state, the first STA may perform communication on one link.

### Advantageous Effects

According to the present disclosure, a multi-link single radio (MLSR) station (STA) in a wireless LAN can receive resource allocation information (e.g., communication resource allocation information) from an access point (AP) on multi-links. Before receiving the resource allocation information, the MLSR STA cannot perform an operation of transmitting/receiving a frame (e.g., a data frame). When the resource allocation information is received from the AP, the MLSR STA can maintain an operation state capable of transmitting/receiving a frame in a resource interval indicated by the resource allocation information. Alternatively, "when the resource allocation information is received from the AP and there is a frame (e.g., data) to be transmitted by the MLSR STA in the resource interval indicated by the resource allocation information", the MLSR STA can maintain an operation state capable of transmitting/receiving the frame in the resource interval indicated by the resource allocation information. Accordingly, the MLSR STA can normally transmit/receive a frame in a resource (e.g., resource interval) allocated by the AP, and thus communication can be smoothly performed.

### Description of Drawings

FIG. 1 is a block diagram illustrating a first embodiment of a communication node constituting a wireless local area network (LAN) system.
FIG. 2 is a conceptual diagram illustrating a first embodiment of multi-links configured between multi-link devices (MLDs).
FIG. 3 is a timing diagram illustrating a first embodiment of a communication method of an EMLSR STA.
FIG. 4 is a timing diagram illustrating a second embodiment of a communication method of an EMLSR STA.
FIG. 5 is a timing diagram illustrating a third embodiment of a communication method of an EMLSR STA.
FIG. 6 is a timing diagram illustrating a fourth embodiment of a communication method of an EMLSR STA.
FIG. 7 is a timing diagram illustrating a fifth embodiment of a communication method of an EMLSR STA.
FIG. 8 is a timing diagram illustrating a sixth embodiment of a communication method of an EMLSR STA.
FIG. 9 is a timing diagram illustrating a seventh embodiment of a communication method of an EMLSR STA.

### Mode for Invention

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

In the following, a wireless communication system to which exemplary embodiments according to the present disclosure are applied will be described. The wireless communication system to which the exemplary embodiments according to the present disclosure are applied is not limited to the contents described below, and the exemplary embodiments according to the present disclosure can be applied to various wireless communication systems. A wireless communication system may be referred to as a 'wireless communication network'.

In an embodiment, "configuring an operation (e.g., transmission operation)" may mean signaling "configuration information (e.g., information element, parameter) for the operation" and/or "information indicating that the operation is performed". "Configuring an information element (e.g., parameter)" may mean signaling the information element. "Configuring a resource (e.g., resource area)" may mean signaling configuration information of the resource. Frames proposed in the present disclosure may be commonly referred to as a first frame, a second frame, a third frame and the like. A transmission time point of a frame may mean a transmission start time point or a transmission end time point, and a reception time point of a frame may mean a reception start time point or a reception end time point. A transmission time point may be interpreted to correspond to a reception time point. A time point may be interpreted as a time, and a time may be interpreted as a time point.

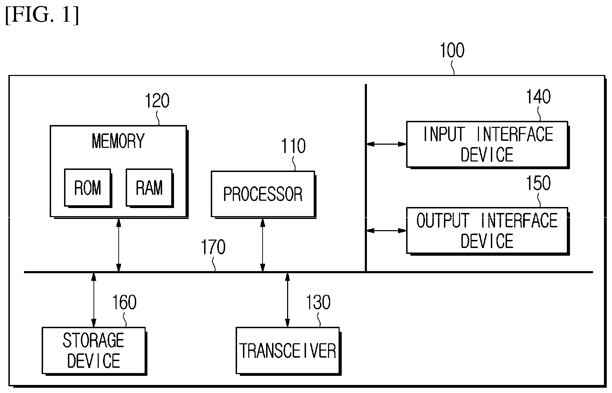

FIG. 1 is a block diagram illustrating a first exemplary embodiment of a communication node constituting a wireless LAN system.

As shown in FIG. 1, a communication node 100 may be an access point, a station, an access point (AP) multi-link device (MLD), or a non-AP MLD. The access point may refer to an AP, and the station may refer to a STA or a non-AP STA. The operating channel width supported by the access point may be 20 megahertz (MHz), 80 MHz, 160 MHz, or the like. The operating channel width supported by the station may be 20MHz, 80MHz, or the like.

The communication node 100 may include at least one processor 110, a memory 120, and a plurality of transceivers 130 connected to a network to perform communications. The transceiver 130 may be referred to as a transceiver, a radio frequency (RF) unit, an RF module, or the like. In addition, the communication node 100 may further include an input interface device 140, an output interface device 150, a storage device 160, and the like. The components included in the communication node 100 may be connected by a bus 170 to communicate with each other.

However, the respective components included in the communication node 100 may be connected through individual interfaces or individual buses centering on the processor 110 instead of the common bus 170. For example, the processor 110 may be connected to at least one of the memory 120, the transceiver 130, the input interface device 140, the output interface device 150, and the storage device 160 through a dedicated interface.

The processor 110 may execute at least one instruction stored in at least one of the memory 120 and the storage device 160. The processor 110 may refer to a central processing unit (CPU), a graphics processing unit (GPU), or a dedicated processor on which the methods according to the exemplary embodiments of the present invention are performed. Each of the memory 120 and the storage device 160 may be configured as at least one of a volatile storage medium and a nonvolatile storage medium. For example, the memory 120 may be configured with at least one of a read only memory (ROM) and a random access memory (RAM).

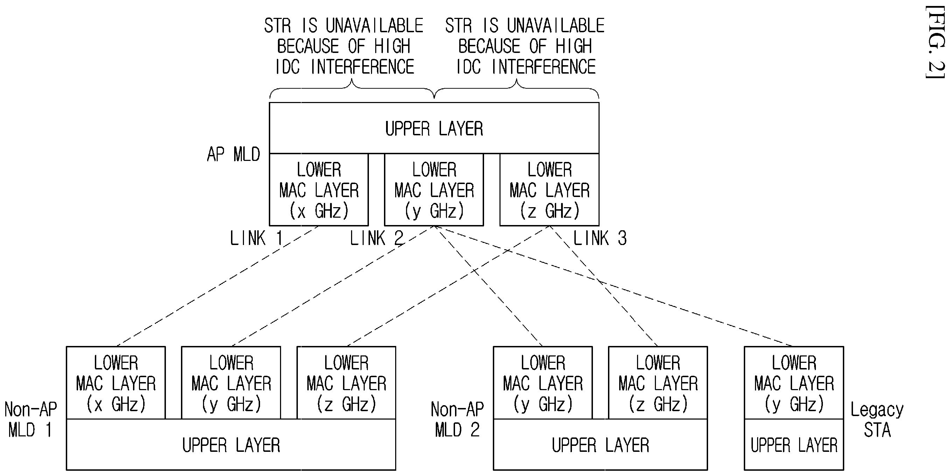

FIG. 2 is a conceptual diagram illustrating a first exemplary embodiment of multi-links configured between MLDs.

As shown in FIG. 2, an MLD may have one medium access control (MAC) address. In exemplary embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) (STA(s)) affiliated with the non-AP MLD may have different MAC addresses. Each of the APs having different MAC addresses may be in charge of each link among multiple links supported by the AP MLD, and may perform a role of an independent AP.

Each of the STAs having different MAC addresses may be in charge of each link among multiple links supported by the non-AP MLD, and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In exemplary embodiments, a link may mean a channel or a band. A device that does not support the STR operation may be referred to as a non-STR (NSTR) AP MLD or an NSTR non-AP MLD (or NSTR STA MLD).

The MLD may transmit and receive frames in multiple links (i.e., multi-link) by using a non-contiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a 'communication node' or 'lower entity'. The communication node (i.e., AP) may operate under control of an upper layer (or the processor 110 shown in FIG. 1). The non-AP MLD may include a plurality of STAs, and the plurality of STAs may operate in different links. Each of the plurality of STAs may be referred to as a 'communication node' or 'lower entity'. The communication node (i.e., STA) may operate under control of an upper layer (or the processor 110 shown in FIG. 1).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band, and perform communications using a 160 MHz bandwidth according to a channel expansion scheme in a 5 GHz band. The MLD may perform communications using a 160 MHz bandwidth in the 5 GHz band, and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, the respective links may be referred to as a link 1, a link 2, and a link 3. A link number may be set by the AP, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

When a band separation between multiple links (e.g., a band separation between the link 1 and the link 2 in the frequency domain) is sufficient, the MLD may perform an STR operation. For example, the MLD may transmit a physical layer convergence procedure (PLCP) protocol data unit (PPDU) 1 using the link 1 among multiple links, and may receive a PPDU 2 using the link 2 among multiple links. On the other hand, if the MLD performs the STR operation when the band separation between multiple links is insufficient, in-device coexistence (IDC) interference, which is interference between the multiple links, may occur. Therefore, a link pair with insufficient band separation between multiple links may be a non-STR link pair, and the MLD may operate as a non-STR MLD (e.g., non-STR non-AP (STA) MLD or non-STR AP MLD) that is not capable of STR operations. The AP included in the non-STR AP MLD may be a soft AP. The exemplary embodiments below may be performed by the AP (e.g., AP included in the STR AP MLD) as well as a soft AP (e.g., AP included in the non-STR AP MLD).

For example, a multi-link including a link 1, a link 2, and a link 3 may be configured between the AP MLD and the non-AP MLD 1. If the band separation between the link 1 and the link 3 is sufficient, the AP MLD may perform an STR operation using the link 1 and the link 3. In other words, the AP MLD may transmit a frame using the link 1 and may receive a frame using the link 3. If the band separation between the link 1 and the link 2 is not sufficient, the link 1 and the link 2 may be a non-STR link pair, and the AP MLD or STA MLD may not be able to perform an STR operation using the link 1 and the link 2. If the band separation between the links 2 and 3 is not sufficient, the AP MLD or the STA MLD may not be able to perform an STR operation using the link 2 and 3.

Meanwhile, in a wireless LAN system, a negotiation procedure for a multi-link operation may be performed in an access procedure between a STA and an AP. A device (e.g., AP or STA) supporting a multi-link may be referred to as a multi-link device (MLD). An AP supporting a multi-link may be referred to as an AP MLD, and a STA supporting a multi-link may be referred to as a non-AP MLD or STA MLD. The AP MLD may have a physical address (e.g., MAC address) for each link. The AP MLD may be implemented as if an AP in charge of each link exists separately. A plurality of APs may be managed within one AP MLD. Accordingly, coordination between the plurality of APs belonging to the same AP MLD may be possible. The STA MLD may have a physical address (e.g., MAC address) for each link. The STA MLD may be implemented as if an STA in charge of each link exists separately. A plurality of STAs may be managed within one STA MLD. Accordingly, coordination between the plurality of STAs belonging to the same STA MLD may be possible.

For example, an AP1 of the AP MLD and a STA1 of the STA MLD may each be in charge of a first link and may communicate using the first link. An AP2 of the AP MLD and a STA2 of the STA MLD may each be in charge of a second link, and may communicate using the second link. The STA2 may receive state change information for the first link in the second link. In this case, the STA MLD may collect information (e.g., state change information) received from each link, and may control operations performed by the STA1 based on the collected information.

Next, methods for transmitting and receiving data in a wireless LAN system will be described. When a method (e.g., transmission or reception of a signal) performed in a first communication node among communication nodes is described, a second communication node corresponding to it may perform a method (e.g., reception or transmission of a signal) corresponding to the method performed in the first communication node. In other words, when an operation of an STA is described, an AP corresponding to it may perform an operation corresponding to the operation of the STA. On the other hand, when an operation of an AP is described, an STA corresponding to it may perform an operation corresponding to the operation of the AP.

In the present disclosure, an operation of an STA may be interpreted as an operation of an STA MLD, and an operation of an STA MLD may be interpreted as an operation of an STA. An operation of an AP may be interpreted as an operation of an AP MLD, and an operation of an AP MLD may be interpreted as an operation of an AP. An STA of an STA MLD may mean an STA connected with the STA MLD, and an AP of an AP MLD may mean an AP connected with the AP MLD. When an STA MLD includes a first STA operating on a first link and a second STA operating on a second link, an operation of the STA MLD on the first link may be interpreted as an operation of the first STA, and an operation of the STA MLD on the second link may be interpreted as an operation of the second STA. When an AP MLD includes a first AP operating on a first link and a second AP operating on a second link, an operation of the AP MLD on the first link may be interpreted as an operation of the first AP, and an operation of the AP MLD on the second link may be interpreted as an operation of the second AP.

In the present disclosure, a wireless LAN may support a multi-link single radio (MLSR) operation and/or an enhanced multi-link single radio (EMLSR) operation. The MLSR operation and the EMLSR operation may be used in a same meaning. For example, an EMLSR operation supported in the present disclosure may be applied to a wireless LAN supporting an MLSR operation. An MLSR operation supported in the present disclosure may be applied to a wireless LAN supporting an EMLSR operation. An MLD supporting an EMLSR operation may be an EMLSR MLD, an EMLSR AP MLD and/or an EMLSR STA MLD. An EMLSR AP may be an AP supporting an EMLSR operation. An EMLSR STA may be an STA supporting an EMLSR operation. An EMLSR MLD, an EMLSR AP MLD, an EMLSR STA MLD, an EMLSR AP and/or an EMLSR STA may support an EMLSR operation and/or an MLSR operation.

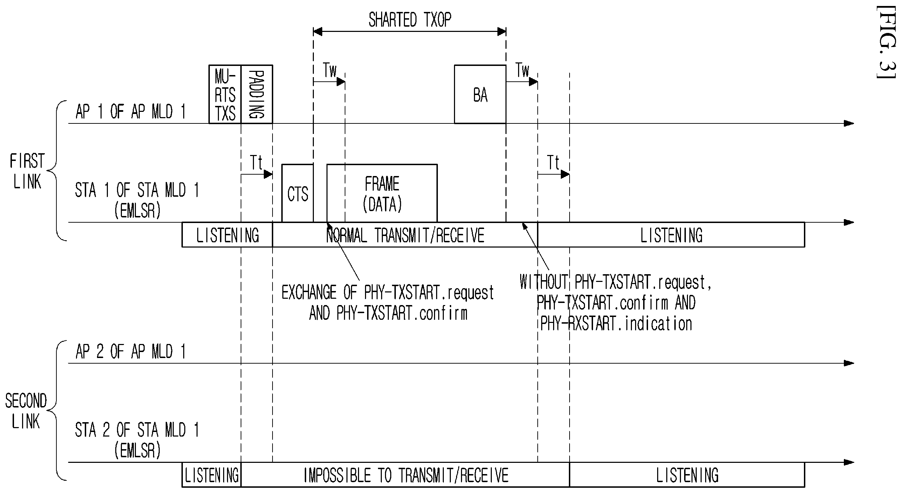

FIG. 3 is a timing diagram illustrating a first embodiment of a communication method of an EMLSR STA.

Referring to FIG. 3, a wireless LAN may support a multi-link operation. An AP MLD 1 and/or an STA MLD 1 may operate on multiple links (e.g., a first link and a second link). An AP connected with the AP MLD 1 operating on the first link may be referred to as an AP 1. An AP connected with the AP MLD 1 operating on the first link may be referred to as an AP 2. An STA connected with the STA MLD 1 operating on the first link may be referred to as an STA 1. An STA connected with the STA MLD 1 operating on the first link may be referred to as an STA 2. The STA MLD 1 may support an EMLSR operation (e.g., an MLSR operation). In other words, the STA MLD 1 may be an EMLSR STA MLD (e.g., an MLSR STA MLD). The STA MLD 1 may perform an EMLSR operation on multiple links (e.g., the first link and the second link). An STA connected with the STA MLD 1 on each link may be referred to as an EMLSR STA. The STA 1 operating on the first link may be referred to as an EMLSR STA 1, and the STA 2 operating on the second link may be referred to as an EMLSR STA 2.

An EMLSR STA MLD may initiate or terminate an EMLSR operation (or EMLSR mode) by exchanging an enhanced multi-link (EML) operating mode notification (OMN) frame with an AP MLD. Before the EMLSR mode is initiated or terminated, one STA of the STA 1 or the STA 2 may perform a normal transmit/receive operation and/or a listening operation by using one transceiver (e.g., one radio) at a preset time. The STA 1 and the STA 2 may be incapable of simultaneously performing a normal transmit/receive operation.

When the EMLSR STA MLD initiates the EMLSR mode through exchange of the EML OMN frame, the EMLSR STA MLD may operate in the EMLSR mode on EMLSR links that are negotiated between the EMLSR STA MLD and the AP MLD. In other words, the EMLSR STA MLD may perform an EMLSR operation on the EMLSR links. In the EMLSR mode, the EMLSR STA MLD (e.g., EMLSR STA) may perform a listening operation or a normal transmit/receive operation. The EMLSR STA MLD may perform the listening operation to receive a frame (e.g., an initial control frame) with a predefined format on EMLSR links.

When the initial control frame is received, the EMLSR STA MLD may transition all receiving radios (e.g., all receiving antennas) or all transmitting/receiving radios (e.g., all transmitting/receiving antennas) operating on links other than the link, on which the initial control frame is received, to the link on which the initial control frame is received, and perform a normal transmit/receive operation on the link on which the initial control frame is received. In other words, the EMLSR STA MLD may transmit/receive a frame with an AP MLD on the link on which the initial control frame is received. When the EMLSR STA MLD wants to transmit a frame to the AP MLD, the EMLSR STA MLD may transition all radios to one link among EMLSR links and transmit the frame to the AP MLD by using radios (e.g., all the radios) on the one link.

The STA 1 may perform a normal transmit/receive operation and a listening operation. A state of performing a normal transmit/receive operation may be referred to as a normal transmit/receive state. A state of performing a listening operation may be referred to as a listening state. When a normal transmit/receive operation is performed, the STA 1 may perform a transmit/receive operation for all frames. In other words, the STA 1 operating in the normal transmit/receive state may perform communication on one link (e.g., the first link). When a listening operation is performed, the STA 1 may receive only a frame with a predefined format. In other words, the STA 1 operating in the listening state may perform a listening operation to receive the frame on an EMLSR link(s). A frame with a predefined format may be an initial control frame. The initial control frame may be a multi-user (Mu)-request to send (RTS) frame or a buffer status report poll (BSRP) trigger frame.

When an operation state of the STA 1 is a listening state, the STA 2 connected to the EMLSR STA MLD 1 may perform a listening operation. When the operation state of the STA 1 is a normal transmit/receive state, an operation state of the STA 2 connected to the EMLSR STA MLD 1 may be a state incapable of transmission/reception. In the state incapable of transmission/reception, the STA 2 may not be able to transmit/receive a frame. When the STA 1 transitions from a listening state to a normal transmit/receive state, the STA 2 may be in a state in capable of transmission/reception. For a time required for transitioning from the normal transmit/receive state to the listening state (e.g., Tt time), the STA 2 may be in a state incapable of transmission/reception. A change of an operation state may be applied likewise to the STA 1 and the STA 2 (e.g., STAs connected with a same EMLSR STA MLD). For example, if the STA 2 is in a listening state, the STA 1 may be in the listening state. If the STA 2 is in a normal transmit/receive state, the STA 1 may be in a state incapable of transmission/reception.

On the first link, the AP 1 may configure (e.g., obtain, initiate) a TXOP before performing a transmit opportunity (TXOP) sharing operation. The TXOP may be configured (e.g., obtained, initiated), when "the AP 1 performs a procedure of exchanging a RTS frame and a clear to send (CTS) frame", "the AP 1 transmits a CTS-to-self frame" and/or "the AP1 transmits a data frame". As another method, the AP1 may configure the TXOP by performing "an operation of transmitting a TXOP sharing (TXS) operation" and/or "an operation of transmitting an initial control frame (e.g., an MU-RTS frame, an MU-RTS trigger frame, an MU-RTS TXS frame) and an operation of receiving a CTS frame".

Within the TXOP configured on the first link, the AP 1 may transmit the MU-RTS frame to the STA 1 (e.g., an EMLSR STA) without performing a channel contention procedure. The MU-RTS frame may be an initial control frame of an EMLSR operation. The MU-RTS frame may be a frame indicating a TXOP sharing operation (e.g., an MU-RTS TXS frame). A difference between the MU-RTS TXS frame and the MU-RTS frame used for an initial control frame (ICF) may be a value of a triggered TXOP sharing mode subfield included in a common info field. For example, a value of a triggered TXOP sharing mode subfield included in the MU-RTS TXS frame may be set to a value indicating TXOP sharing, and a value of a triggered TXOP sharing mode subfield included in the MU-RTS frame used for the ICF may be set to a value not indicating TXOP sharing.

A recipient of the MU-RTS frame used for the ICF and the MU-RTS TXS frame may be one STA. Information on the STA, which is the recipient, may be indicated by a user info field included in the MU-RTS frame and the MU-RTS TXS frame. A TXOP sharing operation may be a triggered TXOP sharing operation. For example, the AP 1 may share part or all of TXOP with the STA 1. A TXOP sharing mode may be set to 1. In this case, a recipient of a frame, which the STA 1 transmits at a shared TXOP, may be the AP 1. In other words, "when the AP 1 shares a TXOP with the STA 1 and a TXOP sharing mode is indicated by 1', the STA 1 may transmit and receive a frame (e.g., a data frame) to and from the AP 1 sharing the TXOP within the shared TXOP. Accordingly, an operation according to the TXOP sharing mode 1 may be an "operation in which the STA 1 transmits the data frame to the AP 1". The STA 1 may perform an uplink transmission to an AP within a shared TXOP.

An EMLSR STA operating in an EMLSR mode may receive an initial control frame during a listening operation. In this case, in order to perform a normal transmit/receive operation on a link on which the initial control frame is received, the EMLSR STA may transition receiving radio(s) from links other than the link on which the initial control frame is received to the link on which the initial control frame is received. A time required for transitioning the receiving radio(s) may be a time Tt. A time required for transitioning from a normal transmit/receive state to a listening state may be the time Tt. The time Tt may be an EMLSR transition delay or an EMLSR padding delay.

A MU-RTS frame, which is an initial control frame, may indicate TXOP sharing. A length of padding included in the MU-RTS frame should be longer than a length corresponding to the time Tt that is required for transitioning an operation state of an EMLSR STA from a listening state to a normal transmit/receive state. Accordingly, in order to make the length of padding included in the MU-RTS frame equal to or longer than the length corresponding to the time Tt, the MU-RTS frame may include padding bits (e.g., a padding bit). The padding bit may be a bit for increasing a time length of a frame. The STA 1 may receive a MU-RTS frame from the AP 1. When the MU-RTS frame of the AP 1 is received, the STA 1 may transition an operation state from a listening state to a normal transmit/receive state.

The STA 1 may decode the MU-RTS frame of the AP 1 and confirm that the AP 1 performs TXOP sharing, based on a decoding result (e.g., information element(s) included in the MU-RTS frame (e.g., field(s))). For example, the STA 1 may identify a time indicated by an allocation duration subfield of the MU-RTS frame and identify a TXOP length shared by the AP 1 based on the identified time. The shared TXOP length or/and shared TXOP may be referred to as a time allocated by the MU-RTS TXS trigger frame. The STA 1 may transmit a CTS frame to the AP 1 after a short interframe space (SIFS) following a reception time (e.g., a reception end time) of the MU-RTS frame of the AP 1. The STA 1 may confirm that a medium access control (MAC) primitive and/or a physical primitive occurs during a time Tw from a transmission time (e.g., a transmission end time) of the CTS frame. The MAC primitive may occur at a MAC layer. The PHY primitive may occur at a PHY layer. An operation of the STA 1 based on a primitive(s) (e.g., a MAC primitive and/or a PHY primitive), which occurs during the time Tw, may be performed based on the following condition(s). The time Tw may be aSIFSTime + aSlotTime + aRxPHYStartDelay.

If one or more of the following conditions are satisfied during the Tw time, the STA 1 may not transition an operation state from a normal transmit/receive state to a listening state.
- **Condition 1:** A PHY-RXSTART.indication primitive occurs at a PHY layer of the STA 1.
- **Condition** 2: A MAC layer of the STA 1 delivers the PHY-RXSTART.indication primitive to the PHY layer of the STA 1, and the PHY layer delivers a PHY-TXSTART.confirm primitive to the MAC layer as a response to the request (e.g., PHY-TXSTART.request primitive).

If neither Condition 1 nor Condition 2 is satisfied, the STA 1 may transition an operation state from a normal transmit/receive state to a listening state. Each of Condition 1 and Condition 2 may be a state maintenance condition (or state transition condition). If a state maintenance condition (e.g., at least one state maintenance condition) is satisfied for a preset time (e.g., the time Tw), the STA 1 may maintain a current operation state (e.g., a normal transmit/receive state). If a state maintenance condition (e.g., all the state maintenance conditions) is not satisfied for a preset time (e.g., the time Tw), the STA 1 may transition the current operation state. Herein, the STA 1 may transition the operation state from the normal transmit/receive state to a listening state. Condition 1 may mean "a condition for the STA 1 to receive a frame from another communication node (e.g., the AP 1 or another STA)". Condition 2 may mean "a condition for a frame to be transmitted to another communication node (e.g., the AP 1 or another STA) to occur at the STA 1".

As the TXOP of the AP 1 is shared with the STA 1, the STA 1 may transmit a frame to the AP 1 within an SIFS or a point coordination function (PCF) interframe space (PIFS) from a transmission time of a CTS frame. Within the shared TXOP, the STA 1 may be a TXOP holder or TXOP owner. The SIFS or PIFS may be a time shorter than the time Tw. The STA 1 may transmit a frame (e.g., a data frame) to the AP 1 and receive a response frame for the frame from the AP 1. In the present disclosure, the response frame may mean an acknowledgment (ACK) frame or a block ACK (BA) frame.

The STA 1 may wait for the time Tw starting from a time it receives the ACK frame of the AP 1. In other words, the STA 1 may determine whether a state maintenance condition(s) is satisfied for the time Tw. A frame (e.g., a data frame) to be transmitted to the AP 1 may not be present in the STA 1. Accordingly, a MAC layer of the STA 1 may not deliver the PHY-TXSTART.request primitive to a PHY layer of the STA 1 for the time Tw. In this case, the PHY layer of the STA 1 may not deliver the PHY-TXSTART.confirm primitive, which is a response to the PHY-TXSTART.request primitive, to the MAC layer of the STA 1. A frame (e.g., data) to be transmitted to the STA 1 may not be present in the AP 1. Accordingly, the AP 1 may not transmit any frame to the STA 1, and the STA 1 may not receive any frame from the AP 1. When no frame is received, the PHY layer of the STA 1 may not generate the PHY-RXSTART.indication primitive. In other words, when no frame is received, the PHY-RXSTART.indication primitive may not occur in the PHY layer of the STA 1 for the time Tw. If neither Condition 1 nor Condition 2 is satisfied, the STA 1 may operate in the listening state after the time Tw. In other words, the operation state of the STA 1 may transition from the normal transmit/receive state to the listening state after the time Tw.

As another method, at a shared TXOP indicated by a MU-RTS frame of the AP 1, the STA 1 may not transition an operation state from a normal transmit/receive state to a listening state. In other words, the operation state of the STA 1 may be maintained as the normal transmit/receive state within the shared TXOP (e.g., within a time allocated by a MU-RTS TXS frame). After an end time of the shared TXOP, the STA 1 may transition the operation state from the normal transmit/receive state to the listening state. For example, when the AP 1 shares a TXOP with the STA 1, the STA 1 may operate as a TXOP owner within the shared TXOP. Alternatively, the STA 1 may operate similarly to a TXOP owner within the shared TXOP. In other words, just as the STA 1 obtains a TXOP, the STA 1 may operate in EMLSR mode within the shared TXOP. "The STA 1 operating in EMLSR mode" may mean that "the STA 1 does not return to the listening state". In other words, "the STA 1 operating in EMLSR mode" may mean that "the STA 1 operates in a state capable of transmitting and receiving a frame (that is, the normal transmit/receive state)". When the STA 1 connected with the EMLSR STA MLD 1 obtains a TXOP, the STA 1 may perform a normal transmitting/receiving operation within the TXOP. In other words, the STA 1 may transmit/receive a frame within the TXOP.

For example, the STA 1 may receive a MU-RTS TXS frame from the AP 1 and transmit a CTS frame to the AP 1 as a response to the MU-RTS TXS frame. In this case, a TXOP of the AP 1 may be shared with the STA 1. The STA 1 may consider that a TXOP of the STA 1 is obtained within the shared TXOP (e.g., a time allocated by the MU-RTS TXS frame). The STA 1 may operate as a TXOP owner within the shared TXOP. Alternatively, the STA 1 may operate similarly to a TXOP owner within the shared TXOP. The STA 1 may perform a normal transmitting/receiving operation within the shared TXOP. The STA 1 may transmit a frame to the AP 1 within the shared TXOP. When the shared TXOP ends (e.g., expires, is interrupted), the STA 1 may transition the operation state from the normal transmit/receive state to the listening state. A time required for the STA 1 to transition the operation state from the normal transmit/receive state to the listening state may be the time Tt (e.g., a EMLSR transition delay time, a EMLSR padding delay time). The STA 1 may transmit a frame to the AP 1 that instructs to interrupt the shared TXOP midway. In the frame, a RDG/More PPDU subfield of a command and status (CAS) field of a A-control filed included in a MAC header may be set to 0, and a recipient of the frame may be the AP 1. In other words, the shared TXOP may be terminated midway. The STA 1 may transition the operation state to the listening state in the time Tt after a time a frame (e.g., a BA frame) is received as a response to the frame transmitted to the AP 1. As another method, the STA 1 may not have to receive a frame as a response to the frame transmitted to the AP 1. In this case, the STA 1 may transition the operation state from the normal transmit/receive state to the listening state after the time Tt (EMLSR transition delay time, EMLSR padding delay time) starting from a transmission time of the frame (e.g., a transmission end time).

The AP MLD 1 may transmit a TXS frame and/or an initial control frame (e.g., a MU-RTS frame, a MU-RTS trigger frame, a MU-RTS TXS frame) to the STA 1 of the STA MLD 1. Then, the AP MLD 1 may not transmit the initial control frame to the STA 2 of the STA MLD 1 by using an EMLSR link(s) (e.g., the second link) within a shared TXOP indicated by the MU-RTS frame.

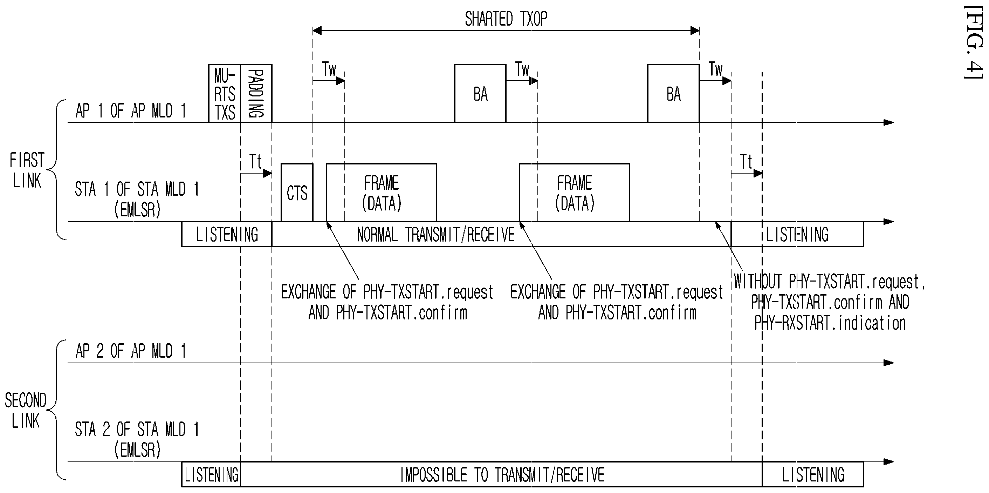

FIG. 4 is a timing diagram illustrating a second embodiment of a communication method of an EMLSR STA.

Referring to FIG. 4, a wireless LAN may support a multi-link operation. An AP MLD 1 and/or an STA MLD 1 may operate on multiple links (e.g., a first link and a second link). An AP connected with the AP MLD 1 operating on the first link may be referred to as an AP 1. An AP connected with the AP MLD 1 operating on the first link may be referred to as an AP 2. An STA connected with the STA MLD 1 operating on the first link may be referred to as an STA 1. An STA connected with the STA MLD 1 operating on the first link may be referred to as an STA 2. The STA MLD 1 may support an EMLSR operation (e.g., an MLSR operation). In other words, the STA MLD 1 may be an EMLSR STA MLD (e.g., an MLSR STA MLD). The STA MLD 1 may perform an EMLSR operation on multiple links (e.g., the first link and the second link). An STA connected with the STA MLD 1 on each link may be referred to as an EMLSR STA. The STA 1 operating on the first link may be referred to as an EMLSR STA 1, and the STA 2 operating on the second link may be referred to as an EMLSR STA 2.

An EMLSR STA MLD may initiate or terminate an EMLSR operation (or EMLSR mode) by exchanging an enhanced multi-link (EML) operating mode notification (OMN) frame with an AP MLD. Before the EMLSR mode is initiated or terminated, one STA of the STA 1 or the STA 2 may perform a normal transmit/receive operation and/or a listening operation by using one transceiver (e.g., one radio) at a preset time. The STA 1 and the STA 2 may be incapable of simultaneously performing a normal transmit/receive operation.

When the EMLSR STA MLD initiates the EMLSR mode through exchange of the EML OMN frame, the EMLSR STA MLD may operate in the EMLSR mode on EMLSR links that are negotiated between the EMLSR STA MLD and the AP MLD. In other words, the EMLSR STA MLD may perform an EMLSR operation on the EMLSR links. In the EMLSR mode, the EMLSR STA MLD (e.g., EMLSR STA) may perform a listening operation or a normal transmit/receive operation. The EMLSR STA MLD may perform the listening operation to receive a frame (e.g., an initial control frame) with a predefined format on EMLSR links.

When the initial control frame is received, the EMLSR STA MLD may transition all receiving radios (e.g., all receiving antennas) or all transmitting/receiving radios (e.g., all transmitting/receiving antennas) operating on links other than the link, on which the initial control frame is received, to the link on which the initial control frame is received, and perform a normal transmit/receive operation on the link on which the initial control frame is received. In other words, the EMLSR STA MLD may transmit/receive a frame with an AP MLD on the link on which the initial control frame is received. When the EMLSR STA MLD wants to transmit a frame to the AP MLD, the EMLSR STA MLD may transition all radios to one link among EMLSR links and transmit the frame to the AP MLD by using radios (e.g., all the radios) on the one link.

The STA 1 may perform a normal transmit/receive operation and a listening operation. A state of performing a normal transmit/receive operation may be referred to as a normal transmit/receive state. A state of performing a listening operation may be referred to as a listening state. When a normal transmit/receive operation is performed, the STA 1 may perform a transmit/receive operation for all frames. In other words, the STA 1 operating in the normal transmit/receive state may perform communication on one link (e.g., the first link). When a listening operation is performed, the STA 1 may receive only a frame with a predefined format. In other words, the STA 1 operating in the listening state may perform a listening operation to receive the frame on an EMLSR link(s). A frame with a predefined format may be an initial control frame. The initial control frame may be a MU-RTS frame or a BSRP trigger frame.

When an operation state of the STA 1 is a listening state, the STA 2 connected to the EMLSR STA MLD 1 may perform a listening operation. When the operation state of the STA 1 is a normal transmit/receive state, an operation state of the STA 2 connected to the EMLSR STA MLD 1 may be a state incapable of transmission/reception. In the state incapable of transmission/reception, the STA 2 may not be able to transmit/receive a frame. When the STA 1 transitions from a listening state to a normal transmit/receive state, the STA 2 may be in a state in capable of transmission/reception. For a time required for transitioning from the normal transmit/receive state to the listening state (e.g., Tt time), the STA 2 may be in a state incapable of transmission/reception. A change of an operation state may be applied likewise to the STA 1 and the STA 2 (e.g., STAs connected with a same EMLSR STA MLD). For example, if the STA 2 is in a listening state, the STA 1 may be in the listening state. If the STA 2 is in a normal transmit/receive state, the STA 1 may be in a state incapable of transmission/reception.

On the first link, the AP 1 may configure (e.g., obtain, initiate) a TXOP before performing a transmit opportunity (TXOP) sharing operation. The TXOP may be configured (e.g., obtained, initiated), when "the AP 1 performs a procedure of exchanging a RTS frame and a clear to send (CTS) frame", "the AP 1 transmits a CTS-to-self frame" and/or "the AP1 transmits a data frame". As another method, the AP1 may configure the TXOP by performing "an operation of transmitting a TXOP sharing (TXS) operation" and/or "an operation of transmitting an initial control frame (e.g., an MU-RTS frame, an MU-RTS trigger frame, an MU-RTS TXS frame) and an operation of receiving a CTS frame".

Within the TXOP configured on the first link, the AP 1 may transmit the MU-RTS frame to the STA 1 (e.g., an EMLSR STA) without performing a channel contention procedure. The MU-RTS frame may be an initial control frame of an EMLSR operation. The MU-RTS frame may be a frame indicating a TXOP sharing operation (e.g., an MU-RTS TXS frame). A difference between the MU-RTS TXS frame and the MU-RTS frame used for an initial control frame (ICF) may be a value of a triggered TXOP sharing mode subfield included in a common info field. For example, a value of a triggered TXOP sharing mode subfield included in the MU-RTS TXS frame may be set to a value indicating TXOP sharing, and a value of a triggered TXOP sharing mode subfield included in the MU-RTS frame used for the ICF may be set to a value not indicating TXOP sharing.

A recipient of the MU-RTS frame used for the ICF and the MU-RTS TXS frame may be one STA. Information on the STA, which is the recipient, may be indicated by a user info field included in the MU-RTS frame and the MU-RTS TXS frame. A TXOP sharing operation may be a triggered TXOP sharing operation. For example, the AP 1 may share part or all of TXOP with the STA 1. A TXOP sharing mode may be set to 1. In this case, a recipient of a frame, which the STA 1 transmits at a shared TXOP, may be the AP 1. In other words, "when the AP 1 shares a TXOP with the STA 1 and a TXOP sharing mode is indicated by 1', the STA 1 may transmit and receive a frame (e.g., a data frame) to and from the AP 1 sharing the TXOP within the shared TXOP. Accordingly, an operation according to the TXOP sharing mode 1 may be an "operation in which the STA 1 transmits the data frame to the AP 1". The STA 1 may perform an uplink transmission to an AP within a shared TXOP.

An EMLSR STA operating in an EMLSR mode may receive an initial control frame during a listening operation. In this case, in order to perform a normal transmit/receive operation on a link on which the initial control frame is received, the EMLSR STA may transition receiving radio(s) from links other than the link on which the initial control frame is received to the link on which the initial control frame is received. A time required for transitioning the receiving radio(s) may be a time Tt. A time required for transitioning from a normal transmit/receive state to a listening state may be the time Tt. The time Tt may be an EMLSR transition delay or an EMLSR padding delay.

A MU-RTS frame, which is an initial control frame, may indicate TXOP sharing. A length of padding included in the MU-RTS frame should be longer than a length corresponding to the time Tt that is required for transitioning an operation state of an EMLSR STA from a listening state to a normal transmit/receive state. Accordingly, in order to make the length of padding included in the MU-RTS frame equal to or longer than the length corresponding to the time Tt, the MU-RTS frame may include padding bits (e.g., a padding bit). The padding bit may be a bit for increasing a time length of a frame. The STA 1 may receive a MU-RTS frame from the AP 1. When the MU-RTS frame of the AP 1 is received, the STA 1 may transition an operation state from a listening state to a normal transmit/receive state.

The STA 1 may decode the MU-RTS frame of the AP 1 and confirm that the AP 1 performs TXOP sharing, based on a decoding result (e.g., information element(s) included in the MU-RTS frame (e.g., field(s))). For example, the STA 1 may identify a time indicated by an allocation duration subfield of the MU-RTS frame and identify a TXOP length shared by the AP 1 based on the identified time. The shared TXOP length or/and shared TXOP may be referred to as a time allocated by the MU-RTS TXS trigger frame. The STA 1 may transmit a CTS frame to the AP 1 after a short interframe space (SIFS) following a reception time (e.g., a reception end time) of the MU-RTS frame of the AP 1. The STA 1 may confirm that a medium access control (MAC) primitive and/or a PHY primitive occurs during a time Tw from a transmission time (e.g., a transmission end time) of the CTS frame. An operation of the STA 1 based on a primitive(s) (e.g., a MAC primitive and/or a PHY primitive), which occurs during the time Tw, may be performed based on the following condition(s). The time Tw may be aSIFSTime + aSlotTime + aRxPHYStartDelay.

If one or more of the following conditions are satisfied during the Tw time, the STA 1 may not transition an operation state from a normal transmit/receive state to a listening state.
- **Condition 1:** A PHY-RXSTART.indication primitive occurs at a PHY layer of the STA 1.
- **Condition 2:** A MAC layer of the STA 1 delivers the PHY-RXSTART.indication primitive to the PHY layer of the STA 1, and the PHY layer delivers a PHY-TXSTART.confirm primitive to the MAC layer as a response to the request (e.g., PHY-TXSTART.request primitive).

If neither Condition 1 nor Condition 2 is satisfied, the STA 1 may transition an operation state from a normal transmit/receive state to a listening state. Each of Condition 1 and Condition 2 may be a state maintenance condition (or state transition condition). If a state maintenance condition (e.g., at least one state maintenance condition) is satisfied for a preset time (e.g., the time Tw), the STA 1 may maintain a current operation state (e.g., a normal transmit/receive state). If a state maintenance condition (e.g., all the state maintenance conditions) is not satisfied for a preset time (e.g., the time Tw), the STA 1 may transition the current operation state. Herein, the STA 1 may transition the operation state from the normal transmit/receive state to a listening state. Condition 1 may mean "a condition for the STA 1 to receive a frame from another communication node (e.g., the AP 1 or another STA)". Condition 2 may mean "a condition for a frame to be transmitted to another communication node (e.g., the AP 1 or another STA) to occur at the STA 1".

As the TXOP of the AP 1 is shared with the STA 1, the STA 1 may transmit a frame to the AP 1 within an SIFS or PIFS from a transmission time of a CTS frame. Within the shared TXOP, the STA 1 may be a TXOP holder or TXOP owner. The SIFS or PIFS may be a time shorter than the time Tw. The STA 1 may transmit a frame to the AP 1 and receive a response frame for the frame from the AP 1. In the present disclosure, the response frame may mean an ACK frame or a BA frame.

The STA 1 may wait for the time Tw starting from a time it receives the ACK frame of the AP 1. In other words, the STA 1 may determine whether a state maintenance condition(s) is satisfied for the time Tw. A frame (e.g., data) to be transmitted to the AP 1 may be present in the STA 1. Accordingly, a MAC layer of the STA 1 may deliver the PHY-TXSTART.request primitive to a PHY layer of the STA 1 for the time Tw. In this case, the PHY layer of the STA 1 may receive the PHY-TXSTART.request primitive from the MAC layer of the STA 1 and deliver the PHY-TXSTART.confirm primitive to the MAC layer of the STA 1 as a response to the PHY-TXSTART.request primitive. In this case, Condition 2 may be satisfied, and the STA 1 may not transition the operation state from the normal transmit/receive state to the listening state after the time Tw.

The STA 1 may transmit a frame to the AP 1 after a SIFS following a reception time (e.g., a reception end time) of the ACK frame of the AP 1. The STA 1 may receive a response frame (e.g., ACK frame, BA frame) for the frame from the AP 1. The STA 1 may wait for the time Tw starting from a time it receives the response frame of the AP 1. In other words, the STA 1 may determine whether a state maintenance condition(s) is satisfied for the time Tw. A frame (e.g., data) to be transmitted to the AP 1 may not be present in the STA 1. Accordingly, a MAC layer of the STA 1 may not deliver the PHY-TXSTART.request primitive to a PHY layer of the STA 1 for the time Tw. In this case, the PHY layer of the STA 1 may not deliver the PHY-TXSTART.confirm primitive, which is a response to the PHY-TXSTART.request primitive, to the MAC layer of the STA 1.

A frame (e.g., data) to be transmitted to the STA 1 may not be present in the AP 1. Accordingly, the AP 1 may not transmit any frame to the STA 1, and the STA 1 may not receive any frame from the AP 1. When no frame is received, the PHY layer of the STA 1 may not generate the PHY-RXSTART.indication primitive. In other words, when no frame is received, the PHY-RXSTART.indication primitive may not occur in the PHY layer of the STA 1 for the time Tw. If neither Condition 1 nor Condition 2 is satisfied, the STA 1 may operate in the listening state after the time Tw. In other words, the operation state of the STA 1 may transition from the normal transmit/receive state to the listening state after the time Tw.

As another method, at a shared TXOP indicated by a MU-RTS frame of the AP 1, the STA 1 may not transition an operation state from a normal transmit/receive state to a listening state. In other words, the operation state of the STA 1 may be maintained as the normal transmit/receive state within the shared TXOP (e.g., within a time allocated by a MU-RTS TXS frame). After an end time of the shared TXOP, the STA 1 may transition the operation state from the normal transmit/receive state to the listening state. For example, when the AP 1 shares a TXOP with the STA 1, the STA 1 may operate as a TXOP owner within the shared TXOP. Alternatively, the STA 1 may operate similarly to a TXOP owner within the shared TXOP. In other words, just as the STA 1 obtains a TXOP, the STA 1 may operate in EMLSR mode within the shared TXOP. "The STA 1 operating in EMLSR mode" may mean that "the STA 1 does not return to the listening state". In other words, "the STA 1 operating in EMLSR mode" may mean that "the STA 1 operates in a state capable of transmitting and receiving a frame (that is, the normal transmit/receive state)". When the STA 1 connected with the EMLSR STA MLD 1 obtains a TXOP, the STA 1 may perform a normal transmitting/receiving operation within the TXOP. In other words, the STA 1 may transmit/receive a frame within the TXOP.

For example, the STA 1 may receive a MU-RTS TXS frame from the AP 1 and transmit a CTS frame to the AP 1 as a response to the MU-RTS TXS frame. In this case, a TXOP of the AP 1 may be shared with the STA 1. The STA 1 may consider that a TXOP of the STA 1 is obtained within the shared TXOP (e.g., a time allocated by the MU-RTS TXS frame). The STA 1 may operate as a TXOP owner within the shared TXOP. Alternatively, the STA 1 may operate similarly to a TXOP owner within the shared TXOP. The STA 1 may perform a normal transmitting/receiving operation within the shared TXOP. The STA 1 may transmit a frame to the AP 1 within the shared TXOP. When the shared TXOP ends (e.g., expires, is interrupted), the STA 1 may transition the operation state from the normal transmit/receive state to the listening state. A time required for the STA 1 to transition the operation state from the normal transmit/receive state to the listening state may be the time Tt (e.g., a EMLSR transition delay time, a EMLSR padding delay time). The STA 1 may transmit a frame to the AP 1 that instructs to interrupt the shared TXOP midway. In the frame, a RDG/More PPDU subfield of a command and status (CAS) field of a A-control filed included in a MAC header may be set to 0. A recipient of the frame may be the AP 1. In other words, the shared TXOP may be terminated midway. The STA 1 may transition the operation state to the listening state in the time Tt after a time a frame (e.g., a BA frame) is received as a response to the frame transmitted to the AP 1. As another method, the STA 1 may not have to receive a frame as a response to the frame transmitted to the AP 1. In this case, the STA 1 may transition the operation state from the normal transmit/receive state to the listening state after the time Tt (EMLSR transition delay time, EMLSR padding delay time) starting from a transmission time of the frame (e.g., a transmission end time).

The AP MLD 1 may transmit a TXS frame and/or an initial control frame (e.g., a MU-RTS frame, a MU-RTS trigger frame, a MU-RTS TXS frame) to the STA 1 of the STA MLD 1. Then, the AP MLD 1 may not transmit the initial control frame to the STA 2 of the STA MLD 1 by using an EMLSR link(s) (e.g., the second link) within a shared TXOP indicated by the MU-RTS frame.

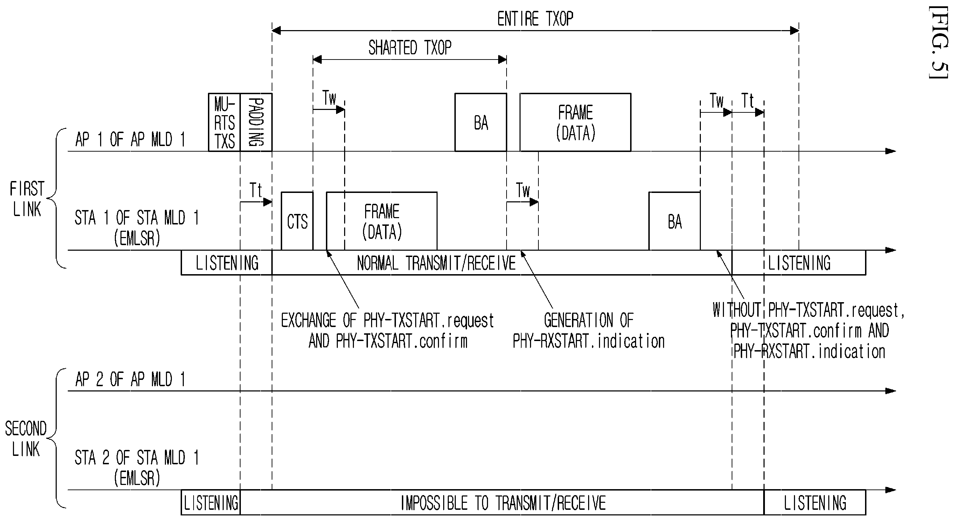

FIG. 5 is a timing diagram illustrating a third embodiment of a communication method of an EMLSR STA.

Referring to FIG. 5, a wireless LAN may support a multi-link operation. An AP MLD 1 and/or an STA MLD 1 may operate on multiple links (e.g., a first link and a second link). An AP connected with the AP MLD 1 operating on the first link may be referred to as an AP 1. An AP connected with the AP MLD 1 operating on the first link may be referred to as an AP 2. An STA connected with the STA MLD 1 operating on the first link may be referred to as an STA 1. An STA connected with the STA MLD 1 operating on the first link may be referred to as an STA 2. The STA MLD 1 may support an EMLSR operation (e.g., an MLSR operation). In other words, the STA MLD 1 may be an EMLSR STA MLD (e.g., an MLSR STA MLD). The STA MLD 1 may perform an EMLSR operation on multiple links (e.g., the first link and the second link). An STA connected with the STA MLD 1 on each link may be referred to as an EMLSR STA. The STA 1 operating on the first link may be referred to as an EMLSR STA 1, and the STA 2 operating on the second link may be referred to as an EMLSR STA 2.

An EMLSR STA MLD may initiate or terminate an EMLSR operation (or EMLSR mode) by exchanging an enhanced multi-link (EML) operating mode notification (OMN) frame with an AP MLD. Before the EMLSR mode is initiated or terminated, one STA of the STA 1 or the STA 2 may perform a normal transmit/receive operation and/or a listening operation by using one transceiver (e.g., one radio) at a preset time. The STA 1 and the STA 2 may be incapable of simultaneously performing a normal transmit/receive operation.

When the EMLSR STA MLD initiates the EMLSR mode through exchange of the EML OMN frame, the EMLSR STA MLD may operate in the EMLSR mode on EMLSR links that are negotiated between the EMLSR STA MLD and the AP MLD. In other words, the EMLSR STA MLD may perform an EMLSR operation on the EMLSR links. In the EMLSR mode, the EMLSR STA MLD (e.g., EMLSR STA) may perform a listening operation or a normal transmit/receive operation. The EMLSR STA MLD may perform the listening operation to receive a frame (e.g., an initial control frame) with a predefined format on EMLSR links.

When the initial control frame is received, the EMLSR STA MLD may transition all receiving radios (e.g., all receiving antennas) or all transmitting/receiving radios (e.g., all transmitting/receiving antennas) operating on links other than the link, on which the initial control frame is received, to the link on which the initial control frame is received, and perform a normal transmit/receive operation on the link on which the initial control frame is received. In other words, the EMLSR STA MLD may transmit/receive a frame with an AP MLD on the link on which the initial control frame is received. When the EMLSR STA MLD wants to transmit a frame to the AP MLD, the EMLSR STA MLD may transition all radios to one link among EMLSR links and transmit the frame to the AP MLD by using radios (e.g., all the radios) on the one link.

The STA 1 may perform a normal transmit/receive operation and a listening operation. A state of performing a normal transmit/receive operation may be referred to as a normal transmit/receive state. A state of performing a listening operation may be referred to as a listening state. When a normal transmit/receive operation is performed, the STA 1 may perform a transmit/receive operation for all frames. In other words, the STA 1 operating in the normal transmit/receive state may perform communication on one link (e.g., the first link). When a listening operation is performed, the STA 1 may receive only a frame with a predefined format. In other words, the STA 1 operating in the listening state may perform a listening operation to receive the frame on an EMLSR link(s). A frame with a predefined format may be an initial control frame. The initial control frame may be a MU-RTS frame or a BSRP trigger frame.

When an operation state of the STA 1 is a listening state, the STA 2 connected to the EMLSR STA MLD 1 may perform a listening operation. When the operation state of the STA 1 is a normal transmit/receive state, an operation state of the STA 2 connected to the EMLSR STA MLD 1 may be a state incapable of transmission/reception. In the state incapable of transmission/reception, the STA 2 may not be able to transmit/receive a frame. When the STA 1 transitions from a listening state to a normal transmit/receive state, the STA 2 may be in a state in capable of transmission/reception. For a time required for transitioning from the normal transmit/receive state to the listening state (e.g., Tt time), the STA 2 may be in a state incapable of transmission/reception. A change of an operation state may be applied likewise to the STA 1 and the STA2 (e.g., STAs connected with a same EMLSR STA MLD). For example, if the STA2 is in a listening state, the STA 1 may be in the listening state. If the STA 2 is in a normal transmit/receive state, the STA 1 may be in a state incapable of transmission/reception.

On the first link, the AP 1 may configure (e.g., obtain, initiate) a TXOP before performing a transmit opportunity (TXOP) sharing operation. The TXOP may be configured (e.g., obtained, initiated), when "the AP 1 performs a procedure of exchanging a RTS frame and a clear to send (CTS) frame", "the AP 1 transmits a CTS-to-self frame" and/or "the AP1 transmits a data frame". As another method, the AP1 may configure the TXOP by performing "an operation of transmitting a TXOP sharing (TXS) operation" and/or "an operation of transmitting an initial control frame (e.g., an MU-RTS frame, an MU-RTS trigger frame, an MU-RTS TXS frame) and an operation of receiving a CTS frame".

Within the TXOP configured on the first link, the AP 1 may transmit the MU-RTS frame to the STA 1 (e.g., an EMLSR STA) without performing a channel contention procedure. The MU-RTS frame may be an initial control frame of an EMLSR operation. The MU-RTS frame may be a frame indicating a TXOP sharing operation (e.g., an MU-RTS TXS frame). A difference between the MU-RTS TXS frame and the MU-RTS frame used for an initial control frame (ICF) may be a value of a triggered TXOP sharing mode subfield included in a common info field. For example, a value of a triggered TXOP sharing mode subfield included in the MU-RTS TXS frame may be set to a value indicating TXOP sharing, and a value of a triggered TXOP sharing mode subfield included in the MU-RTS frame used for the ICF may be set to a value not indicating TXOP sharing.

A recipient of the MU-RTS frame used for the ICF and the MU-RTS TXS frame may be one STA. Information on the STA, which is the recipient, may be indicated by a user info field included in the MU-RTS frame and the MU-RTS TXS frame. A TXOP sharing operation may be a triggered TXOP sharing operation. For example, the AP 1 may share part or all of TXOP with the STA 1. A TXOP sharing mode may be set to 1. In this case, a recipient of a frame, which the STA 1 transmits at a shared TXOP, may be the AP 1. In other words, "when the AP 1 shares a TXOP with the STA 1 and a TXOP sharing mode is indicated by 1', the STA 1 may transmit and receive a frame (e.g., a data frame) to and from the AP 1 sharing the TXOP within the shared TXOP. Accordingly, an operation according to the TXOP sharing mode 1 may be an "operation in which the STA 1 transmits the data frame to the AP 1". The STA 1 may perform an uplink transmission to an AP within a shared TXOP.

An EMLSR STA operating in an EMLSR mode may receive an initial control frame during a listening operation. In this case, in order to perform a normal transmit/receive operation on a link on which the initial control frame is received, the EMLSR STA may transition receiving radio(s) from links other than the link on which the initial control frame is received to the link on which the initial control frame is received. A time required for transitioning the receiving radio(s) may be a time Tt. A time required for transitioning from a normal transmit/receive state to a listening state may be the time Tt. The time Tt may be an EMLSR transition delay or an EMLSR padding delay.

A MU-RTS frame, which is an initial control frame, may indicate TXOP sharing. A length of padding included in the MU-RTS frame should be longer than a length corresponding to the time Tt that is required for transitioning an operation state of an EMLSR STA from a listening state to a normal transmit/receive state. Accordingly, in order to make the length of padding included in the MU-RTS frame equal to or longer than the length corresponding to the time Tt, the MU-RTS frame may include padding bits (e.g., a padding bit). The padding bit may be a bit for increasing a time length of a frame. The STA 1 may receive a MU-RTS frame from the AP 1. When the MU-RTS frame of the AP 1 is received, the STA 1 may transition an operation state from a listening state to a normal transmit/receive state.

The STA 1 may decode the MU-RTS frame of the AP 1 and confirm that the AP 1 performs TXOP sharing, based on a decoding result (e.g., information element(s) included in the MU-RTS frame (e.g., field(s))). For example, the STA 1 may identify a time indicated by an allocation duration subfield of the MU-RTS frame and identify a TXOP length shared by the AP 1 based on the identified time. The shared TXOP length or/and shared TXOP may be referred to as a time allocated by the MU-RTS TXS trigger frame. The STA 1 may transmit a CTS frame to the AP 1 after a short interframe space (SIFS) following a reception time (e.g., a reception end time) of the MU-RTS frame of the AP 1. The STA 1 may confirm that a medium access control (MAC) primitive and/or a PHY primitive occurs during a time Tw from a transmission time (e.g., a transmission end time) of the CTS frame. An operation of the STA 1 based on a primitive(s) (e.g., a MAC primitive and/or a PHY primitive), which occurs during the time Tw, may be performed based on the following condition(s). The time Tw may be aSIFSTime + aSlotTime + aRxPHYStartDelay.

If one or more of the following conditions are satisfied during the Tw time, the STA 1 may not transition an operation state from a normal transmit/receive state to a listening state.
- **Condition 1:** A PHY-RXSTART.indication primitive occurs at a PHY layer of the STA 1.
- **Condition 2:** A MAC layer of the STA 1 delivers the PHY-RXSTART.indication primitive to the PHY layer of the STA 1, and the PHY layer delivers a PHY-TXSTART.confirm primitive to the MAC layer as a response to the request (e.g., PHY-TXSTART.request primitive).

If neither Condition 1 nor Condition 2 is satisfied, the STA 1 may transition an operation state from a normal transmit/receive state to a listening state. Each of Condition 1 and Condition 2 may be a state maintenance condition (or state transition condition). If a state maintenance condition (e.g., at least one state maintenance condition) is satisfied for a preset time (e.g., the time Tw), the STA 1 may maintain a current operation state (e.g., a normal transmit/receive state). If a state maintenance condition (e.g., all the state maintenance conditions) is not satisfied for a preset time (e.g., the time Tw), the STA 1 may transition the current operation state. Herein, the STA 1 may transition the operation state from the normal transmit/receive state to a listening state. Condition 1 may mean "a condition for the STA 1 to receive a frame from another communication node (e.g., the AP 1 or another STA)". Condition 2 may mean "a condition for a frame to be transmitted to another communication node (e.g., the AP 1 or another STA) to occur at the STA 1".

As the TXOP of the AP 1 is shared with the STA 1, the STA 1 may transmit a frame to the AP 1 within an SIFS or PIFS from a transmission time of a CTS frame. Within the shared TXOP, the STA 1 may be a TXOP holder or TXOP owner. The SIFS or PIFS may be a time shorter than the time Tw. The STA 1 may transmit a frame to the AP 1 and receive a response frame for the frame from the AP 1. In the present disclosure, the response frame may mean an ACK frame or a BA frame.

The shared TXOP may be terminated within all TXOPs obtained by the AP 1. When the shared TXOP is terminated by the AP 1, the STA 1 may not be able to transmit a frame. Independently of the termination of the shared TXOP (e.g., TXOP sharing), the STA 1 may wait for the time Tw starting from a time the response frame (e.g., ACK frame) is received (e.g., a reception end time), in order to determine whether a condition(s) for transitioning from the normal transmit/receive state to the listening state is satisfied. When the shared TXOP is terminated, the STA 1 may check only whether Condition 1 is satisfied for the time Tw. After the shared TXOP is terminated, the AP 1 may transmit a frame to the STA 1 within a remaining TXOP of all the TXOPs.

For example, the AP 1 may transmit a frame to the STA 1 within the time Tw starting from a time a response frame (e.g., ACK frame), which is a last frame received from the STA 1, is received (e.g., a reception time of the response frame + SIFS or PIFS). The STA 1 may receive the frame from the AP 1. Accordingly, the PHY-RXSTART.indication primitive may occur in the PHY layer of the STA 1 within the time Tw. In this case, Condition 1 may be satisfied, and the STA 1 may receive the frame from the AP 1 without transitioning to the listening state. In other words, if condition 1 is satisfied, the STA 1 may maintain the normal receive/transmit state and perform communication with the AP 1.

The STA 1 may receive the frame from the AP 1, transmit a response frame (e.g., ACK frame) for the frame to the AP 1 and wait for the time Tw starting from a time the response frame is received. In other words, the STA 1 may determine whether a state maintenance condition(s) is satisfied for the time Tw. A frame (e.g., data) to be transmitted to the AP 1 may not be present in the STA 1. Accordingly, a MAC layer of the STA 1 may not deliver the PHY-TXSTART.request primitive to a PHY layer of the STA 1 for the time Tw. In this case, the PHY layer of the STA 1 may not deliver the PHY-TXSTART.confirm primitive, which is a response to the PHY-TXSTART.request primitive, to the MAC layer of the STA 1.

A frame (e.g., data) to be transmitted to the STA 1 may not be present in the AP 1. Accordingly, the AP 1 may not transmit any frame to the STA 1, and the STA 1 may not receive any frame from the AP 1. When no frame is received, the PHY layer of the STA 1 may not generate the PHY-RXSTART.indication primitive. In other words, when no frame is received, the PHY-RXSTART.indication primitive may not occur in the PHY layer of the STA 1 for the time Tw. If neither Condition 1 nor Condition 2 is satisfied, the STA 1 may operate in the listening state after the time Tw. In other words, the operation state of the STA 1 may transition from the normal transmit/receive state to the listening state after the time Tw.

As another method, at a shared TXOP indicated by a MU-RTS frame of the AP 1, the STA 1 may not transition an operation state from a normal transmit/receive state to a listening state. In other words, the operation state of the STA 1 may be maintained as the normal transmit/receive state within the shared TXOP (e.g., within a time allocated by a MU-RTS TXS frame). After an end time of the shared TXOP, the STA 1 may transition the operation state from the normal transmit/receive state to the listening state. For example, when the AP 1 shares a TXOP with the STA 1, the STA 1 may operate as a TXOP owner within the shared TXOP. Alternatively, the STA 1 may operate similarly to a TXOP owner within the shared TXOP. In other words, just as the STA 1 obtains a TXOP, the STA 1 may operate in EMLSR mode within the shared TXOP. "The STA 1 operating in EMLSR mode" may mean that "the STA 1 does not return to the listening state". In other words, "the STA 1 operating in EMLSR mode" may mean that "the STA 1 operates in a state capable of transmitting and receiving a frame (that is, the normal transmit/receive state)". When the STA 1 connected with the EMLSR STA MLD 1 obtains a TXOP, the STA 1 may perform a normal transmitting/receiving operation within the TXOP. In other words, the STA 1 may transmit/receive a frame within the TXOP.

For example, the STA 1 may receive a MU-RTS TXS frame from the AP 1 and transmit a CTS frame to the AP 1 as a response to the MU-RTS TXS frame. In this case, a TXOP of the AP 1 may be shared with the STA 1. The STA 1 may consider that a TXOP of the STA 1 is obtained within the shared TXOP (e.g., a time allocated by the MU-RTS TXS frame). The STA 1 may operate as a TXOP owner within the shared TXOP. Alternatively, the STA 1 may operate similarly to a TXOP owner within the shared TXOP. The STA 1 may perform a normal transmitting/receiving operation within the shared TXOP. The STA 1 may transmit a frame to the AP 1 within the shared TXOP. When the shared TXOP ends (e.g., expires, is interrupted), the STA 1 may transition the operation state from the normal transmit/receive state to the listening state. A time required for the STA 1 to transition the operation state from the normal transmit/receive state to the listening state may be the time Tt (e.g., a EMLSR transition delay time, a EMLSR padding delay time). The STA 1 may transmit a frame to the AP 1 that instructs to interrupt the shared TXOP midway. In the frame, a RDG/More PPDU subfield of a command and status (CAS) field of a A-control filed included in a MAC header may be set to 0. A recipient of the frame may be the AP 1. In other words, the shared TXOP may be terminated midway. The STA 1 may transition the operation state to the listening state in the time Tt after a time a frame (e.g., a BA frame) is received as a response to the frame transmitted to the AP 1. As another method, the STA 1 may not have to receive a frame as a response to the frame transmitted to the AP 1. In this case, the STA 1 may transition the operation state from the normal transmit/receive state to the listening state after the time Tt (EMLSR transition delay time, EMLSR padding delay time) starting from a transmission time of the frame (e.g., a transmission end time).

The AP MLD 1 may transmit a TXS frame and/or an initial control frame (e.g., a MU-RTS frame, a MU-RTS trigger frame, a MU-RTS TXS frame) to the STA 1 of the STA MLD 1. Then, the AP MLD 1 may not transmit the initial control frame to the STA 2 of the STA MLD 1 by using an EMLSR link(s) (e.g., the second link) within a shared TXOP indicated by the MU-RTS frame.

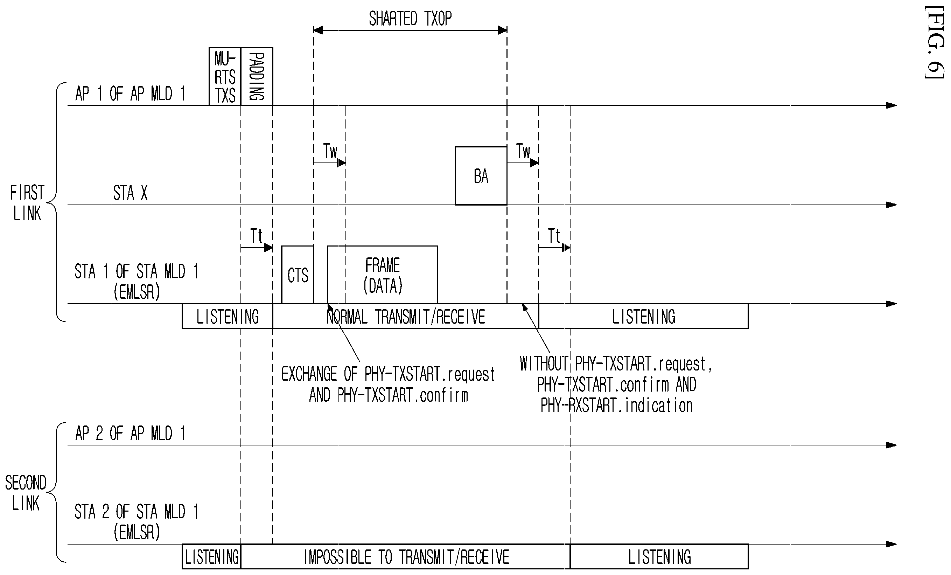

FIG. 6 is a timing diagram illustrating a fourth embodiment of a communication method of an EMLSR STA.

Referring to FIG. 6, a wireless LAN may support a multi-link operation. An AP MLD 1 and/or an STA MLD 1 may operate on multiple links (e.g., a first link and a second link). An AP connected with the AP MLD 1 operating on the first link may be referred to as an AP 1. An AP connected with the AP MLD 1 operating on the first link may be referred to as an AP 2. An STA connected with the STA MLD 1 operating on the first link may be referred to as an STA 1. An STA connected with the STA MLD 1 operating on the first link may be referred to as an STA 2. The STA MLD 1 may support an EMLSR operation (e.g., an MLSR operation). In other words, the STA MLD 1 may be an EMLSR STA MLD (e.g., an MLSR STA MLD). The STA MLD 1 may perform an EMLSR operation on multiple links (e.g., the first link and the second link). An STA connected with the STA MLD 1 on each link may be referred to as an EMLSR STA. The STA 1 operating on the first link may be referred to as an EMLSR STA 1, and the STA 2 operating on the second link may be referred to as an EMLSR STA 2.

An EMLSR STA MLD may initiate or terminate an EMLSR operation (or EMLSR mode) by exchanging an enhanced multi-link (EML) operating mode notification (OMN) frame with an AP MLD. Before the EMLSR mode is initiated or terminated, one STA of the STA 1 or the STA 2 may perform a normal transmit/receive operation and/or a listening operation by using one transceiver (e.g., one radio) at a preset time. The STA 1 and the STA 2 may be incapable of simultaneously performing a normal transmit/receive operation.

When the EMLSR STA MLD initiates the EMLSR mode through exchange of the EML OMN frame, the EMLSR STA MLD may operate in the EMLSR mode on EMLSR links that are negotiated between the EMLSR STA MLD and the AP MLD. In other words, the EMLSR STA MLD may perform an EMLSR operation on the EMLSR links. In the EMLSR mode, the EMLSR STA MLD (e.g., EMLSR STA) may perform a listening operation or a normal transmit/receive operation. The EMLSR STA MLD may perform the listening operation to receive a frame (e.g., an initial control frame) with a predefined format on EMLSR links.

When the initial control frame is received, the EMLSR STA MLD may transition all receiving radios (e.g., all receiving antennas) or all transmitting/receiving radios (e.g., all transmitting/receiving antennas) operating on links other than the link, on which the initial control frame is received, to the link on which the initial control frame is received, and perform a normal transmit/receive operation on the link on which the initial control frame is received. In other words, the EMLSR STA MLD may transmit/receive a frame with an AP MLD on the link on which the initial control frame is received. When the EMLSR STA MLD wants to transmit a frame to the AP MLD, the EMLSR STA MLD may transition all radios to one link among EMLSR links and transmit the frame to the AP MLD by using radios (e.g., all the radios) on the one link.

The STA 1 may perform a normal transmit/receive operation and a listening operation. A state of performing a normal transmit/receive operation may be referred to as a normal transmit/receive state. A state of performing a listening operation may be referred to as a listening state. When a normal transmit/receive operation is performed, the STA 1 may perform a transmit/receive operation for all frames. In other words, the STA 1 operating in the normal transmit/receive state may perform communication on one link (e.g., the first link). When a listening operation is performed, the STA 1 may receive only a frame with a predefined format. In other words, the STA 1 operating in the listening state may perform a listening operation to receive the frame on an EMLSR link(s). A frame with a predefined format may be an initial control frame. The initial control frame may be a MU-RTS frame or a BSRP trigger frame.

When an operation state of the STA 1 is a listening state, the STA 2 connected to the EMLSR STA MLD 1 may perform a listening operation. When the operation state of the STA 1 is a normal transmit/receive state, an operation state of the STA 2 connected to the EMLSR STA MLD 1 may be a state incapable of transmission/reception. In the state incapable of transmission/reception, the STA 2 may not be able to transmit/receive a frame. When the STA 1 transitions from a listening state to a normal transmit/receive state, the STA 2 may be in a state in capable of transmission/reception. For a time required for transitioning from the normal transmit/receive state to the listening state (e.g., Tt time), the STA 2 may be in a state incapable of transmission/reception. A change of an operation state may be applied likewise to the STA 1 and the STA 2 (e.g., STAs connected with a same EMLSR STA MLD). For example, if the STA 2 is in a listening state, the STA 1 may be in the listening state. If the STA 2 is in a normal transmit/receive state, the STA 1 may be in a state incapable of transmission/reception.

On the first link, the AP 1 may configure (e.g., obtain, initiate) a TXOP before performing a transmit opportunity (TXOP) sharing operation. The TXOP may be configured (e.g., obtained, initiated), when "the AP 1 performs a procedure of exchanging a RTS frame and a clear to send (CTS) frame", "the AP 1 transmits a CTS-to-self frame" and/or "the AP1 transmits a data frame". As another method, the AP1 may configure the TXOP by performing "an operation of transmitting a TXOP sharing (TXS) operation" and/or "an operation of transmitting an initial control frame (e.g., an MU-RTS frame, an MU-RTS trigger frame, an MU-RTS TXS frame) and an operation of receiving a CTS frame".

Within the TXOP configured on the first link, the AP 1 may transmit the MU-RTS frame to the STA 1 (e.g., an EMLSR STA) without performing a channel contention procedure. The MU-RTS frame may be an initial control frame of an EMLSR operation. The MU-RTS frame may be a frame indicating a TXOP sharing operation (e.g., an MU-RTS TXS frame). A difference between the MU-RTS TXS frame and the MU-RTS frame used for an initial control frame (ICF) may be a value of a triggered TXOP sharing mode subfield included in a common info field. For example, a value of a triggered TXOP sharing mode subfield included in the MU-RTS TXS frame may be set to a value indicating TXOP sharing, and a value of a triggered TXOP sharing mode subfield included in the MU-RTS frame used for the ICF may be set to a value not indicating TXOP sharing.

A recipient of the MU-RTS frame used for the ICF and the MU-RTS TXS frame may be one STA. Information on the STA, which is the recipient, may be indicated by a user info field included in the MU-RTS frame and the MU-RTS TXS frame. A TXOP sharing operation may be a triggered TXOP sharing operation. For example, the AP 1 may share part or all of TXOP with the STA 1. A TXOP sharing mode may be set to 2. In this case, a recipient of a frame, which the STA 1 transmits at a shared TXOP, may be the AP 1 and/or another STA. In other words, "when the AP 1 shares a TXOP with the STA 1 and a TXOP sharing mode is indicated by 2', the STA 1 may transmit and receive a frame (e.g., a data frame) to and from the AP 1 and/or another STA sharing the TXOP within the shared TXOP. Accordingly, an operation according to the TXOP sharing mode 1 may be an "operation in which the STA 1 transmits the data frame to the AP 1 and/or another STA". The STA 1 may perform an uplink transmission to an AP within a shared TXOP. Alternatively, the STA 1 may perform communication with another STA (e.g., direct communication, peer to peer (P2P) communication) within the shared TXOP.

An EMLSR STA operating in an EMLSR mode may receive an initial control frame during a listening operation. In this case, in order to perform a normal transmit/receive operation on a link on which the initial control frame is received, the EMLSR STA may transition receiving radio(s) from links other than the link on which the initial control frame is received to the link on which the initial control frame is received. A time required for transitioning the receiving radio(s) may be a time Tt. A time required for transitioning from a normal transmit/receive state to a listening state may be the time Tt. The time Tt may be an EMLSR transition delay or an EMLSR padding delay.

A MU-RTS frame, which is an initial control frame, may indicate TXOP sharing. A length of padding included in the MU-RTS frame should be longer than a length corresponding to the time Tt that is required for transitioning an operation state of an EMLSR STA from a listening state to a normal transmit/receive state. Accordingly, in order to make the length of padding included in the MU-RTS frame equal to or longer than the length corresponding to the time Tt, the MU-RTS frame may include padding bits (e.g., a padding bit). The padding bit may be a bit for increasing a time length of a frame. The STA 1 may receive a MU-RTS frame from the AP 1. When the MU-RTS frame of the AP 1 is received, the STA 1 may transition an operation state from a listening state to a normal transmit/receive state.

The STA 1 may decode the MU-RTS frame of the AP 1 and confirm that the AP 1 performs TXOP sharing, based on a decoding result (e.g., information element(s) included in the MU-RTS frame (e.g., field(s))). For example, the STA 1 may identify a time indicated by an allocation duration subfield of the MU-RTS frame and identify a TXOP length shared by the AP 1 based on the identified time. The shared TXOP length or/and shared TXOP may be referred to as a time allocated by the MU-RTS TXS trigger frame. The STA 1 may transmit a CTS frame to the AP 1 after a short interframe space (SIFS) following a reception time (e.g., a reception end time) of the MU-RTS frame of the AP 1. The STA 1 may confirm that a medium access control (MAC) primitive and/or a PHY primitive occurs during a time Tw from a transmission time (e.g., a transmission end time) of the CTS frame. An operation of the STA 1 based on a primitive(s) (e.g., a MAC primitive and/or a PHY primitive), which occurs during the time Tw, may be performed based on the following condition(s). The time Tw may be aSIFSTime + aSlotTime + aRxPHYStartDelay.

If one or more of the following conditions are satisfied during the Tw time, the STA 1 may not transition an operation state from a normal transmit/receive state to a listening state.
- **Condition 1:** A PHY-RXSTART.indication primitive occurs at a PHY layer of the STA 1.
- **Condition 2:** A MAC layer of the STA 1 delivers the PHY-RXSTART.indication primitive to the PHY layer of the STA 1, and the PHY layer delivers a PHY-TXSTART.confirm primitive to the MAC layer as a response to the request (e.g., PHY-TXSTART.request primitive).

If neither Condition 1 nor Condition 2 is satisfied, the STA 1 may transition an operation state from a normal transmit/receive state to a listening state. Each of Condition 1 and Condition 2 may be a state maintenance condition (or state transition condition). If a state maintenance condition (e.g., at least one state maintenance condition) is satisfied for a preset time (e.g., the time Tw), the STA 1 may maintain a current operation state (e.g., a normal transmit/receive state). If a state maintenance condition (e.g., all the state maintenance conditions) is not satisfied for a preset time (e.g., the time Tw), the STA 1 may transition the current operation state. Herein, the STA 1 may transition the operation state from the normal transmit/receive state to a listening state. Condition 1 may mean "a condition for the STA 1 to receive a frame from another communication node (e.g., the AP 1 or another STA)". Condition 2 may mean "a condition for a frame to be transmitted to another communication node (e.g., the AP 1 or another STA) to occur at the STA 1".

As the TXOP of the AP 1 is shared with the STA 1, the STA 1 may transmit a frame to the AP 1 and/or another STA (e.g., STA X) within an SIFS or PIFS from a transmission time of a CTS frame. Within the shared TXOP, the STA 1 may be a TXOP holder or TXOP owner. The SIFS or PIFS may be a time shorter than the time Tw. The STA 1 may transmit a frame to the AP 1 and receive a response frame for the frame from the AP 1. Alternatively, the STA 1 may transmit a frame to another STA and receive a response frame for the frame from the another STA. In the present disclosure, the response frame may mean an ACK frame or a BA frame.

The STA 1 may wait for the time Tw starting from a time it receives the response frame of the AP 1 or another STA. In other words, the STA 1 may determine whether a state maintenance condition(s) is satisfied for the time Tw. A frame (e.g., data) to be transmitted to the AP 1 or another STA may not be present in the STA 1. Accordingly, a MAC layer of the STA 1 may not deliver the PHY-TXSTART.request primitive to a PHY layer of the STA 1 for the time Tw. In this case, the PHY layer of the STA 1 may not deliver the PHY-TXSTART.confirm primitive, which is a response to the PHY-TXSTART.request primitive, to the MAC layer of the STA 1.

A frame (e.g., data) to be transmitted to the STA 1 may not be present in the AP 1 or another STA. Accordingly, the AP 1 or another STA may not transmit any frame to the STA 1, and the STA 1 may not receive any frame from the AP 1 or the another STA. When no frame is received, the PHY layer of the STA 1 may not generate the PHY-RXSTART.indication primitive. In other words, when no frame is received, the PHY-RXSTART.indication primitive may not occur in the PHY layer of the STA 1 for the time Tw. If neither Condition 1 nor Condition 2 is satisfied, the STA 1 may operate in the listening state after the time Tw. In other words, the operation state of the STA 1 may transition from the normal transmit/receive state to the listening state after the time Tw.

As another method, at a shared TXOP indicated by a MU-RTS frame of the AP 1, the STA 1 may not transition an operation state from a normal transmit/receive state to a listening state. In other words, the operation state of the STA 1 may be maintained as the normal transmit/receive state within the shared TXOP (e.g., within a time allocated by a MU-RTS TXS frame). After an end time of the shared TXOP, the STA 1 may transition the operation state from the normal transmit/receive state to the listening state. For example, when the AP 1 shares a TXOP with the STA 1, the STA 1 may operate as a TXOP owner within the shared TXOP. Alternatively, the STA 1 may operate similarly to a TXOP owner within the shared TXOP. In other words, just as the STA 1 obtains a TXOP, the STA 1 may operate in EMLSR mode within the shared TXOP. "The STA 1 operating in EMLSR mode" may mean that "the STA 1 does not return to the listening state". "The STA 1 operating in EMLSR mode" may mean that "the STA 1 operates in a state capable of transmitting and receiving a frame (that is, the normal transmit/receive state)". When the STA 1 connected with the EMLSR STA MLD 1 obtains a TXOP, the STA 1 may perform a normal transmitting/receiving operation within the TXOP. In other words, the STA 1 may transmit/receive a frame within the TXOP.

For example, the STA 1 may receive a MU-RTS TXS frame from the AP 1 and transmit a CTS frame to the AP 1 as a response to the MU-RTS TXS frame. In this case, a TXOP of the AP 1 may be shared with the STA 1. The STA 1 may consider that a TXOP of the STA 1 is obtained within the shared TXOP (e.g., a time allocated by the MU-RTS TXS frame). The STA 1 may operate as a TXOP owner within the shared TXOP. Alternatively, the STA 1 may operate similarly to a TXOP owner within the shared TXOP. The STA 1 may perform a normal transmitting/receiving operation within the shared TXOP. The STA 1 may transmit a frame to the AP 1 and/or another STA within the shared TXOP. When the shared TXOP ends (e.g., expires, is interrupted), the STA 1 may transition the operation state from the normal transmit/receive state to the listening state. A time required for the STA 1 to transition the operation state from the normal transmit/receive state to the listening state may be the time Tt (e.g., a EMLSR transition delay time, a EMLSR padding delay time). The STA 1 may transmit a frame to the AP 1 that instructs to interrupt the shared TXOP midway. In the frame, a RDG/More PPDU subfield of a command and status (CAS) field of a A-control filed included in a MAC header may be set to 0. A recipient of the frame may be the AP 1. In other words, the shared TXOP may be terminated midway. The STA 1 may transition the operation state to the listening state in the time Tt after a time a frame (e.g., a Block Ack frame) is received as a response to the frame transmitted to the AP 1. As another method, the STA 1 may not have to receive a frame as a response to the frame transmitted to the AP 1. In this case, the STA 1 may transition the operation state from the normal transmit/receive state to the listening state after the time Tt (EMLSR transition delay time, EMLSR padding delay time) starting from a transmission time of the frame (e.g., a transmission end time).

The AP MLD 1 may transmit a TXS frame and/or an initial control frame (e.g., a MU-RTS frame, a MU-RTS trigger frame, a MU-RTS TXS frame) to the STA 1 of the STA MLD 1. Then, the AP MLD 1 may not transmit the initial control frame to the STA 2 of the STA MLD 1 by using an EMLSR link(s) (e.g., the second link) within a shared TXOP indicated by the MU-RTS frame.

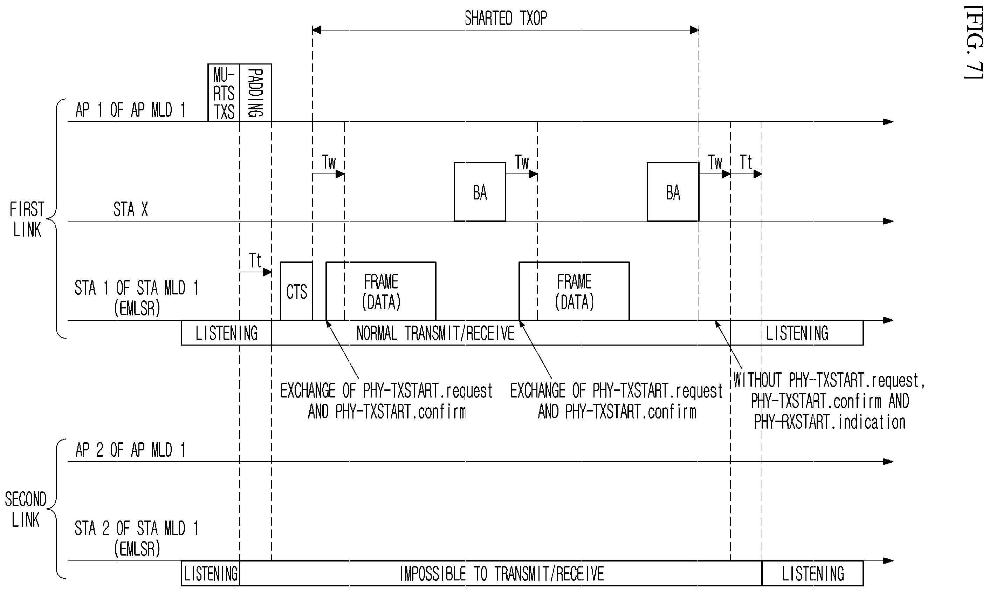

FIG. 7 is a timing diagram illustrating a fifth embodiment of a communication method of an EMLSR STA.

Referring to FIG. 7, a wireless LAN may support a multi-link operation. An AP MLD 1 and/or an STA MLD 1 may operate on multiple links (e.g., a first link and a second link). An AP connected with the AP MLD 1 operating on the first link may be referred to as an AP 1. An AP connected with the AP MLD 1 operating on the first link may be referred to as an AP 2. An STA connected with the STA MLD 1 operating on the first link may be referred to as an STA 1. An STA connected with the STA MLD 1 operating on the first link may be referred to as an STA 2. The STA MLD 1 may support an EMLSR operation (e.g., an MLSR operation). In other words, the STA MLD 1 may be an EMLSR STA MLD (e.g., an MLSR STA MLD). The STA MLD 1 may perform an EMLSR operation on multiple links (e.g., the first link and the second link). An STA connected with the STA MLD 1 on each link may be referred to as an EMLSR STA. The STA 1 operating on the first link may be referred to as an EMLSR STA 1, and the STA 2 operating on the second link may be referred to as an EMLSR STA 2.

An EMLSR STA MLD may initiate or terminate an EMLSR operation (or EMLSR mode) by exchanging an enhanced multi-link (EML) operating mode notification (OMN) frame with an AP MLD. Before the EMLSR mode is initiated or terminated, one STA of the STA 1 or the STA 2 may perform a normal transmit/receive operation and/or a listening operation by using one transceiver (e.g., one radio) at a preset time. The STA 1 and the STA 2 may be incapable of simultaneously performing a normal transmit/receive operation.

When the EMLSR STA MLD initiates the EMLSR mode through exchange of the EML OMN frame, the EMLSR STA MLD may operate in the EMLSR mode on EMLSR links that are negotiated between the EMLSR STA MLD and the AP MLD. In other words, the EMLSR STA MLD may perform an EMLSR operation on the EMLSR links. In the EMLSR mode, the EMLSR STA MLD (e.g., EMLSR STA) may perform a listening operation or a normal transmit/receive operation. The EMLSR STA MLD may perform the listening operation to receive a frame (e.g., an initial control frame) with a predefined format on EMLSR links.

When the initial control frame is received, the EMLSR STA MLD may transition all receiving radios (e.g., all receiving antennas) or all transmitting/receiving radios (e.g., all transmitting/receiving antennas) operating on links other than the link, on which the initial control frame is received, to the link on which the initial control frame is received, and perform a normal transmit/receive operation on the link on which the initial control frame is received. In other words, the EMLSR STA MLD may transmit/receive a frame with an AP MLD on the link on which the initial control frame is received. When the EMLSR STA MLD wants to transmit a frame to the AP MLD, the EMLSR STA MLD may transition all radios to one link among EMLSR links and transmit the frame to the AP MLD by using radios (e.g., all the radios) on the one link.

The STA 1 may perform a normal transmit/receive operation and a listening operation. A state of performing a normal transmit/receive operation may be referred to as a normal transmit/receive state. A state of performing a listening operation may be referred to as a listening state. When a normal transmit/receive operation is performed, the STA 1 may perform a transmit/receive operation for all frames. In other words, the STA 1 operating in the normal transmit/receive state may perform communication on one link (e.g., the first link). When a listening operation is performed, the STA 1 may receive only a frame with a predefined format. In other words, the STA 1 operating in the listening state may perform a listening operation to receive the frame on an EMLSR link(s). A frame with a predefined format may be an initial control frame. The initial control frame may be a MU-RTS frame or a BSRP trigger frame.

When an operation state of the STA 1 is a listening state, the STA 2 connected to the EMLSR STA MLD 1 may perform a listening operation. When the operation state of the STA 1 is a normal transmit/receive state, an operation state of the STA 2 connected to the EMLSR STA MLD 1 may be a state incapable of transmission/reception. In the state incapable of transmission/reception, the STA 2 may not be able to transmit/receive a frame. When the STA 1 transitions from a listening state to a normal transmit/receive state, the STA 2 may be in a state in capable of transmission/reception. For a time required for transitioning from the normal transmit/receive state to the listening state (e.g., Tt time), the STA 2 may be in a state incapable of transmission/reception. A change of an operation state may be applied likewise to the STA 1 and the STA 2 (e.g., STAs connected with a same EMLSR STA MLD). For example, if the STA 2 is in a listening state, the STA 1 may be in the listening state. If the STA 2 is in a normal transmit/receive state, the STA 1 may be in a state incapable of transmission/reception.

On the first link, the AP 1 may configure (e.g., obtain, initiate) a TXOP before performing a transmit opportunity (TXOP) sharing operation. The TXOP may be configured (e.g., obtained, initiated), when "the AP 1 performs a procedure of exchanging a RTS frame and a clear to send (CTS) frame", "the AP 1 transmits a CTS-to-self frame" and/or "the AP1 transmits a data frame". As another method, the AP1 may configure the TXOP by performing "an operation of transmitting a TXOP sharing (TXS) operation" and/or "an operation of transmitting an initial control frame (e.g., an MU-RTS frame, an MU-RTS trigger frame, an MU-RTS TXS frame) and an operation of receiving a CTS frame".

Within the TXOP configured on the first link, the AP 1 may transmit the MU-RTS frame to the STA 1 (e.g., an EMLSR STA) without performing a channel contention procedure. The MU-RTS frame may be an initial control frame of an EMLSR operation. The MU-RTS frame may be a frame indicating a TXOP sharing operation (e.g., an MU-RTS TXS frame). A difference between the MU-RTS TXS frame and the MU-RTS frame used for an initial control frame (ICF) may be a value of a triggered TXOP sharing mode subfield included in a common info field. For example, a value of a triggered TXOP sharing mode subfield included in the MU-RTS TXS frame may be set to a value indicating TXOP sharing, and a value of a triggered TXOP sharing mode subfield included in the MU-RTS frame used for the ICF may be set to a value not indicating TXOP sharing.

A recipient of the MU-RTS frame used for the ICF and the MU-RTS TXS frame may be one STA. Information on the STA, which is the recipient, may be indicated by a user info field included in the MU-RTS frame and the MU-RTS TXS frame. A TXOP sharing operation may be a triggered TXOP sharing operation. For example, the AP 1 may share part or all of TXOP with the STA 1. A TXOP sharing mode may be set to 2. In this case, a recipient of a frame, which the STA 1 transmits at a shared TXOP, may be the AP 1 and/or another STA. In other words, "when the AP 1 shares a TXOP with the STA 1 and a TXOP sharing mode is indicated by 2', the STA 1 may transmit and receive a frame (e.g., a data frame) to and from the AP 1 and/or another STA sharing the TXOP within the shared TXOP. Accordingly, an operation according to the TXOP sharing mode 1 may be an "operation in which the STA 1 transmits the data frame to the AP 1 and/or another STA". The STA 1 may perform an uplink transmission to an AP within a shared TXOP. Alternatively, the STA 1 may perform communication with another STA (e.g., direct communication, P2P communication) within the shared TXOP.

An EMLSR STA operating in an EMLSR mode may receive an initial control frame during a listening operation. In this case, in order to perform a normal transmit/receive operation on a link on which the initial control frame is received, the EMLSR STA may transition receiving radio(s) from links other than the link on which the initial control frame is received to the link on which the initial control frame is received. A time required for transitioning the receiving radio(s) may be a time Tt. A time required for transitioning from a normal transmit/receive state to a listening state may be the time Tt. The time Tt may be an EMLSR transition delay or an EMLSR padding delay.

A MU-RTS frame, which is an initial control frame, may indicate TXOP sharing. A length of padding included in the MU-RTS frame should be longer than a length corresponding to the time Tt that is required for transitioning an operation state of an EMLSR STA from a listening state to a normal transmit/receive state. Accordingly, in order to make the length of padding included in the MU-RTS frame equal to or longer than the length corresponding to the time Tt, the MU-RTS frame may include padding bits (e.g., a padding bit). The padding bit may be a bit for increasing a time length of a frame. The STA 1 may receive a MU-RTS frame from the AP 1. When the MU-RTS frame of the AP 1 is received, the STA 1 may transition an operation state from a listening state to a normal transmit/receive state.

The STA 1 may decode the MU-RTS frame of the AP 1 and confirm that the AP 1 performs TXOP sharing, based on a decoding result (e.g., information element(s) included in the MU-RTS frame (e.g., field(s))). For example, the STA 1 may identify a time indicated by an allocation duration subfield of the MU-RTS frame and identify a TXOP length shared by the AP 1 based on the identified time. The shared TXOP length or/and shared TXOP may be referred to as a time allocated by the MU-RTS TXS trigger frame. The STA 1 may transmit a CTS frame to the AP 1 after a short interframe space (SIFS) following a reception time (e.g., a reception end time) of the MU-RTS frame of the AP 1. The STA 1 may confirm that a medium access control (MAC) primitive and/or a PHY primitive occurs during a time Tw from a transmission time (e.g., a transmission end time) of the CTS frame. An operation of the STA 1 based on a primitive(s) (e.g., a MAC primitive and/or a PHY primitive), which occurs during the time Tw, may be performed based on the following condition(s). The time Tw may be aSIFSTime + aSlotTime + aRxPHYStartDelay.

If one or more of the following conditions are satisfied during the Tw time, the STA 1 may not transition an operation state from a normal transmit/receive state to a listening state.
- **Condition 1:** A PHY-RXSTART.indication primitive occurs at a PHY layer of the STA 1.
- **Condition 2:** A MAC layer of the STA 1 delivers the PHY-RXSTART.indication primitive to the PHY layer of the STA 1, and the PHY layer delivers a PHY-TXSTART.confirm primitive to the MAC layer as a response to the request (e.g., PHY-TXSTART.request primitive).

If neither Condition 1 nor Condition 2 is satisfied, the STA 1 may transition an operation state from a normal transmit/receive state to a listening state. Each of Condition 1 and Condition 2 may be a state maintenance condition (or state transition condition). If a state maintenance condition (e.g., at least one state maintenance condition) is satisfied for a preset time (e.g., the time Tw), the STA 1 may maintain a current operation state (e.g., a normal transmit/receive state). If a state maintenance condition (e.g., all the state maintenance conditions) is not satisfied for a preset time (e.g., the time Tw), the STA 1 may transition the current operation state. Herein, the STA 1 may transition the operation state from the normal transmit/receive state to a listening state. Condition 1 may mean "a condition for the STA 1 to receive a frame from another communication node (e.g., the AP 1 or another STA)". Condition 2 may mean "a condition for a frame to be transmitted to another communication node (e.g., the AP 1 or another STA) to occur at the STA 1".

As the TXOP of the AP 1 is shared with the STA 1, the STA 1 may transmit a frame to the AP 1 and/or another STA (e.g., STA X) within an SIFS or PIFS from a transmission time of a CTS frame. Within the shared TXOP, the STA 1 may be a TXOP holder or TXOP owner. The SIFS or PIFS may be a time shorter than the time Tw. The STA 1 may transmit a frame to the AP 1 and receive a response frame for the frame from the AP 1. Alternatively, the STA 1 may transmit a frame to another STA and receive a response frame for the frame from the another STA. In the present disclosure, the response frame may mean an ACK frame or a BA frame.

The STA 1 may wait for the time Tw starting from a time it receives the response frame of the AP 1 or another STA. In other words, the STA 1 may determine whether a state maintenance condition(s) is satisfied for the time Tw. A frame (e.g., data) to be transmitted to the AP 1 and/or another STA may be present in the STA 1. Accordingly, a MAC layer of the STA 1 may deliver the PHY-TXSTART.request primitive to a PHY layer of the STA 1 for the time Tw. In this case, the PHY layer of the STA 1 may receive the PHY-TXSTART.request primitive from the MAC layer of the STA 1 and deliver the PHY-TXSTART.confirm primitive to the MAC layer of the STA 1 as a response to the PHY-TXSTART.request primitive. In this case, Condition 2 may be satisfied, and the STA 1 may not transition the operation state from the normal transmit/receive state to the listening state after the time Tw.

The STA 1 may transmit a frame to the AP 1 or another STA after a SIFS following a reception time (e.g., a reception end time) of the ACK frame of the AP 1 or the another STA. The STA 1 may receive a response frame (e.g., ACK frame, BA frame) for the frame from the AP 1 or another STA. The STA 1 may wait for the time Tw starting from a time it receives the response frame of the AP 1 or another STA. A frame (e.g., data) to be transmitted to the AP 1 and/or another STA may not be present in the STA 1. Accordingly, a MAC layer of the STA 1 may not deliver the PHY-TXSTART.request primitive to a PHY layer of the STA 1 for the time Tw. In this case, the PHY layer of the STA 1 may not deliver the PHY-TXSTART.confirm primitive, which is a response to the PHY-TXSTART.request primitive, to the MAC layer of the STA 1.

A frame (e.g., data) to be transmitted to the STA 1 may not be present in the AP 1 and/or another STA. Accordingly, the AP 1 and/or another STA may not transmit any frame to the STA 1, and the STA 1 may not receive any frame from the AP 1 and/or the another STA. When no frame is received, the PHY layer of the STA 1 may not generate the PHY-RXSTART.indication primitive. In other words, when no frame is received, the PHY-RXSTART.indication primitive may not occur in the PHY layer of the STA 1 for the time Tw. If neither Condition 1 nor Condition 2 is satisfied, the STA 1 may operate in the listening state after the time Tw. In other words, the operation state of the STA 1 may transition from the normal transmit/receive state to the listening state after the time Tw.

As another method, at a shared TXOP indicated by a MU-RTS frame of the AP 1, the STA 1 may not transition an operation state from a normal transmit/receive state to a listening state. In other words, the operation state of the STA 1 may be maintained as the normal transmit/receive state within the shared TXOP (e.g., within a time allocated by a MU-RTS TXS frame). After an end time of the shared TXOP, the STA 1 may transition the operation state from the normal transmit/receive state to the listening state. For example, when the AP 1 shares a TXOP with the STA 1, the STA 1 may operate as a TXOP owner within the shared TXOP. Alternatively, the STA 1 may operate similarly to a TXOP owner within the shared TXOP. In other words, just as the STA 1 obtains a TXOP, the STA 1 may operate in EMLSR mode within the shared TXOP. "The STA 1 operating in EMLSR mode" may mean that "the STA 1 does not return to the listening state". "The STA 1 operating in EMLSR mode" may mean that "the STA 1 operates in a state capable of transmitting and receiving a frame (e.g., the normal transmit/receive state)". When the STA 1 connected with the EMLSR STA MLD 1 obtains a TXOP, the STA 1 may perform a normal transmitting/receiving operation within the TXOP. In other words, the STA 1 may transmit/receive a frame within the TXOP.

For example, the STA 1 may receive a MU-RTS TXS frame from the AP 1 and transmit a CTS frame to the AP 1 as a response to the MU-RTS TXS frame. In this case, a TXOP of the AP 1 may be shared with the STA 1. The STA 1 may consider that a TXOP of the STA 1 is obtained within the shared TXOP (e.g., a time allocated by the MU-RTS TXS frame). The STA 1 may operate as a TXOP owner within the shared TXOP. Alternatively, the STA 1 may operate similarly to a TXOP owner within the shared TXOP. The STA 1 may perform a normal transmitting/receiving operation within the shared TXOP. The STA 1 may transmit a frame to the AP 1 and/or another STA within the shared TXOP. When the shared TXOP ends (e.g., expires, is interrupted), the STA 1 may transition the operation state from the normal transmit/receive state to the listening state. A time required for the STA 1 to transition the operation state from the normal transmit/receive state to the listening state may be the time Tt (e.g., a EMLSR transition delay time, a EMLSR padding delay time). The STA 1 may transmit a frame to the AP 1 that instructs to interrupt the shared TXOP midway. In the frame, a RDG/More PPDU subfield of a command and status (CAS) field of a A-control filed included in a MAC header may be set to 0. A recipient of the frame may be the AP 1. In other words, the shared TXOP may be terminated midway. The STA 1 may transition the operation state to the listening state in the time Tt after a time a frame (e.g., a BA frame) is received as a response to the frame transmitted to the AP 1. As another method, the STA 1 may not have to receive a frame as a response to the frame transmitted to the AP 1. In this case, the STA 1 may transition the operation state from the normal transmit/receive state to the listening state after the time Tt (e.g., EMLSR transition delay time, EMLSR padding delay time) starting from a transmission time of the frame (e.g., a transmission end time).

The AP MLD 1 may transmit a TXS frame and/or an initial control frame (e.g., a MU-RTS frame, a MU-RTS trigger frame, a MU-RTS TXS frame) to the STA 1 of the STA MLD 1. Then, the AP MLD 1 may not transmit the initial control frame to the STA 2 of the STA MLD 1 by using an EMLSR link(s) (e.g., the second link) within a shared TXOP indicated by the MU-RTS frame.

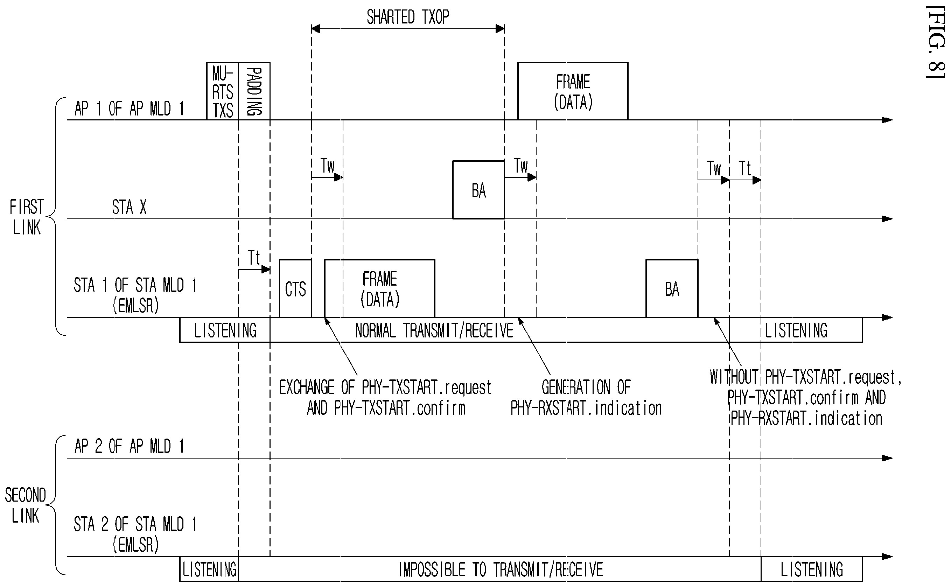

FIG. 8 is a timing diagram illustrating a sixth embodiment of a communication method of an EMLSR STA.

Referring to FIG. 8, a wireless LAN may support a multi-link operation. An AP MLD 1 and/or an STA MLD 1 may operate on multiple links (e.g., a first link and a second link). An AP connected with the AP MLD 1 operating on the first link may be referred to as an AP 1. An AP connected with the AP MLD 1 operating on the first link may be referred to as an AP 2. An STA connected with the STA MLD 1 operating on the first link may be referred to as an STA 1. An STA connected with the STA MLD 1 operating on the first link may be referred to as an STA 2. The STA MLD 1 may support an EMLSR operation (e.g., an MLSR operation). In other words, the STA MLD 1 may be an EMLSR STA MLD (e.g., an MLSR STA MLD). The STA MLD 1 may perform an EMLSR operation on multiple links (e.g., the first link and the second link). An STA connected with the STA MLD 1 on each link may be referred to as an EMLSR STA. The STA 1 operating on the first link may be referred to as an EMLSR STA 1, and the STA 2 operating on the second link may be referred to as an EMLSR STA 2.

An EMLSR STA MLD may initiate or terminate an EMLSR operation (or EMLSR mode) by exchanging an enhanced multi-link (EML) operating mode notification (OMN) frame with an AP MLD. Before the EMLSR mode is initiated or terminated, one STA of the STA 1 or the STA 2 may perform a normal transmit/receive operation and/or a listening operation by using one transceiver (e.g., one radio) at a preset time. The STA 1 and the STA 2 may be incapable of simultaneously performing a normal transmit/receive operation.

When the EMLSR STA MLD initiates the EMLSR mode through exchange of the EML OMN frame, the EMLSR STA MLD may operate in the EMLSR mode on EMLSR links that are negotiated between the EMLSR STA MLD and the AP MLD. In other words, the EMLSR STA MLD may perform an EMLSR operation on the EMLSR links. In the EMLSR mode, the EMLSR STA MLD (e.g., EMLSR STA) may perform a listening operation or a normal transmit/receive operation. The EMLSR STA MLD may perform the listening operation to receive a frame (e.g., an initial control frame) with a predefined format on EMLSR links.

When the initial control frame is received, the EMLSR STA MLD may transition all receiving radios (e.g., all receiving antennas) or all transmitting/receiving radios (e.g., all transmitting/receiving antennas) operating on links other than the link, on which the initial control frame is received, to the link on which the initial control frame is received, and perform a normal transmit/receive operation on the link on which the initial control frame is received. In other words, the EMLSR STA MLD may transmit/receive a frame with an AP MLD on the link on which the initial control frame is received. When the EMLSR STA MLD wants to transmit a frame to the AP MLD, the EMLSR STA MLD may transition all radios to one link among EMLSR links and transmit the frame to the AP MLD by using radios (e.g., all the radios) on the one link.

The STA 1 may perform a normal transmit/receive operation and a listening operation. A state of performing a normal transmit/receive operation may be referred to as a normal transmit/receive state. A state of performing a listening operation may be referred to as a listening state. When a normal transmit/receive operation is performed, the STA 1 may perform a transmit/receive operation for all frames. In other words, the STA 1 operating in the normal transmit/receive state may perform communication on one link (e.g., the first link). When a listening operation is performed, the STA 1 may receive only a frame with a predefined format. In other words, the STA 1 operating in the listening state may perform a listening operation to receive the frame on an EMLSR link(s). A frame with a predefined format may be an initial control frame. The initial control frame may be a MU-RTS frame or a BSRP trigger frame.

When an operation state of the STA 1 is a listening state, the STA 2 connected to the EMLSR STA MLD 1 may perform a listening operation. When the operation state of the STA 1 is a normal transmit/receive state, an operation state of the STA 2 connected to the EMLSR STA MLD 1 may be a state incapable of transmission/reception. In the state incapable of transmission/reception, the STA 2 may not be able to transmit/receive a frame. When the STA 1 transitions from a listening state to a normal transmit/receive state, the STA 2 may be in a state in capable of transmission/reception. For a time required for transitioning from the normal transmit/receive state to the listening state (e.g., Tt time), the STA 2 may be in a state incapable of transmission/reception. A change of an operation state may be applied likewise to the STA 1 and the STA 2 (e.g., STAs connected with a same EMLSR STA MLD). For example, if the STA 2 is in a listening state, the STA 1 may be in the listening state. If the STA 2 is in a normal transmit/receive state, the STA 1 may be in a state incapable of transmission/reception.

On the first link, the AP 1 may configure (e.g., obtain, initiate) a TXOP before performing a transmit opportunity (TXOP) sharing operation. The TXOP may be configured (e.g., obtained, initiated), when "the AP 1 performs a procedure of exchanging a RTS frame and a clear to send (CTS) frame", "the AP 1 transmits a CTS-to-self frame" and/or "the AP1 transmits a data frame". As another method, the AP1 may configure the TXOP by performing "an operation of transmitting a TXOP sharing (TXS) operation" and/or "an operation of transmitting an initial control frame (e.g., an MU-RTS frame, an MU-RTS trigger frame, an MU-RTS TXS frame) and an operation of receiving a CTS frame".

Within the TXOP configured on the first link, the AP 1 may transmit the MU-RTS frame to the STA 1 (e.g., an EMLSR STA) without performing a channel contention procedure. The MU-RTS frame may be an initial control frame of an EMLSR operation. The MU-RTS frame may be a frame indicating a TXOP sharing operation (e.g., an MU-RTS TXS frame). A difference between the MU-RTS TXS frame and the MU-RTS frame used for an initial control frame (ICF) may be a value of a triggered TXOP sharing mode subfield included in a common info field. For example, a value of a triggered TXOP sharing mode subfield included in the MU-RTS TXS frame may be set to a value indicating TXOP sharing, and a value of a triggered TXOP sharing mode subfield included in the MU-RTS frame used for the ICF may be set to a value not indicating TXOP sharing.

A recipient of the MU-RTS frame used for the ICF and the MU-RTS TXS frame may be one STA. Information on the STA, which is the recipient, may be indicated by a user info field included in the MU-RTS frame and the MU-RTS TXS frame. A TXOP sharing operation may be a triggered TXOP sharing operation. For example, the AP 1 may share part or all of TXOP with the STA 1. A TXOP sharing mode may be set to 2. In this case, a recipient of a frame, which the STA 1 transmits at a shared TXOP, may be the AP 1 and/or another STA. In other words, "when the AP 1 shares a TXOP with the STA 1 and a TXOP sharing mode is indicated by 2', the STA 1 may transmit and receive a frame (e.g., a data frame) to and from the AP 1 and/or another STA sharing the TXOP within the shared TXOP. Accordingly, an operation according to the TXOP sharing mode 1 may be an "operation in which the STA 1 transmits the data frame to the AP 1 and/or another STA". The STA 1 may perform an uplink transmission to an AP within a shared TXOP. Alternatively, the STA 1 may perform communication with another STA (e.g., direct communication, P2P communication) within the shared TXOP.

An EMLSR STA operating in an EMLSR mode may receive an initial control frame during a listening operation. In this case, in order to perform a normal transmit/receive operation on a link on which the initial control frame is received, the EMLSR STA may transition receiving radio(s) from links other than the link on which the initial control frame is received to the link on which the initial control frame is received. A time required for transitioning the receiving radio(s) may be a time Tt. A time required for transitioning from a normal transmit/receive state to a listening state may be the time Tt. The time Tt may be an EMLSR transition delay or an EMLSR padding delay.

A MU-RTS frame, which is an initial control frame, may indicate TXOP sharing. A length of padding included in the MU-RTS frame should be longer than a length corresponding to the time Tt that is required for transitioning an operation state of an EMLSR STA from a listening state to a normal transmit/receive state. Accordingly, in order to make the length of padding included in the MU-RTS frame equal to or longer than the length corresponding to the time Tt, the MU-RTS frame may include padding bits (e.g., a padding bit). The padding bit may be a bit for increasing a time length of a frame. The STA 1 may receive a MU-RTS frame from the AP 1. When the MU-RTS frame of the AP 1 is received, the STA 1 may transition an operation state from a listening state to a normal transmit/receive state.

The STA 1 may decode the MU-RTS frame of the AP 1 and confirm that the AP 1 performs TXOP sharing, based on a decoding result (e.g., information element(s) included in the MU-RTS frame (e.g., field(s))). For example, the STA 1 may identify a time indicated by an allocation duration subfield of the MU-RTS frame and identify a TXOP length shared by the AP 1 based on the identified time. The shared TXOP length or/and shared TXOP may be referred to as a time allocated by the MU-RTS TXS trigger frame. The STA 1 may transmit a CTS frame to the AP 1 after a short interframe space (SIFS) following a reception time (e.g., a reception end time) of the MU-RTS frame of the AP 1. The STA 1 may confirm that a medium access control (MAC) primitive and/or a PHY primitive occurs during a time Tw from a transmission time (e.g., a transmission end time) of the CTS frame. An operation of the STA 1 based on a primitive(s) (e.g., a MAC primitive and/or a PHY primitive), which occurs during the time Tw, may be performed based on the following condition(s). The time Tw may be aSIFSTime + aSlotTime + aRxPHYStartDelay.

If one or more of the following conditions are satisfied during the Tw time, the STA 1 may not transition an operation state from a normal transmit/receive state to a listening state.
- **Condition 1:** A PHY-RXSTART.indication primitive occurs at a PHY layer of the STA 1.
- **Condition 2:** A MAC layer of the STA 1 delivers the PHY-RXSTART.indication primitive to the PHY layer of the STA 1, and the PHY layer delivers a PHY-TXSTART.confirm primitive to the MAC layer as a response to the request (e.g., PHY-TXSTART.request primitive).

If neither Condition 1 nor Condition 2 is satisfied, the STA 1 may transition an operation state from a normal transmit/receive state to a listening state. Each of Condition 1 and Condition 2 may be a state maintenance condition (or state transition condition). If a state maintenance condition (e.g., at least one state maintenance condition) is satisfied for a preset time (e.g., the time Tw), the STA 1 may maintain a current operation state (e.g., a normal transmit/receive state). If a state maintenance condition (e.g., all the state maintenance conditions) is not satisfied for a preset time (e.g., the time Tw), the STA 1 may transition the current operation state. Herein, the STA 1 may transition the operation state from the normal transmit/receive state to a listening state. Condition 1 may mean "a condition for the STA 1 to receive a frame from another communication node (e.g., the AP 1 or another STA)". Condition 2 may mean "a condition for a frame to be transmitted to another communication node (e.g., the AP 1 or another STA) to occur at the STA 1".

As the TXOP of the AP 1 is shared with the STA 1, the STA 1 may transmit a frame to the AP 1 and/or another STA (e.g., STA X) within an SIFS or PIFS from a transmission time of a CTS frame. Within the shared TXOP, the STA 1 may be a TXOP holder or TXOP owner. The SIFS or PIFS may be a time shorter than the time Tw. The STA 1 may transmit a frame to the AP 1 and receive a response frame for the frame from the AP 1. Alternatively, the STA 1 may transmit a frame to another STA and receive a response frame for the frame from the another STA. In the present disclosure, the response frame may mean an ACK frame or a BA frame.

The shared TXOP may be terminated within all TXOPs obtained by the AP 1. When the shared TXOP is terminated by the AP 1, the STA 1 may not be able to transmit a frame. Independently of the termination of the shared TXOP (e.g., TXOP sharing), the STA 1 may wait for the time Tw starting from a time the response frame (e.g., ACK frame) is received (e.g., a reception end time), in order to determine whether a condition(s) for transitioning from the normal transmit/receive state to the listening state is satisfied. When the shared TXOP is terminated, the STA 1 may check only whether Condition 1 is satisfied for the time Tw. After the shared TXOP is terminated, the AP 1 may transmit a frame to the STA 1 within a remaining TXOP of all the TXOPs.

For example, the AP 1 may transmit a frame to the STA 1 within the time Tw starting from a time a response frame (e.g., ACK frame), which is a last frame received from the STA 1, is received (e.g., a reception time of the response frame + SIFS or PIFS). Accordingly, the PHY-RXSTART.indication primitive may occur in the PHY layer of the STA 1 within the time Tw. In this case, Condition 1 may be satisfied, and the STA 1 may receive the frame from the AP 1 without transitioning to the listening state. In other words, if condition 1 is satisfied, the STA 1 may maintain the normal receive/transmit state and receive a frame from the AP 1.

The STA 1 may receive the frame from the AP 1, transmit a response frame (e.g., ACK frame) for the frame to the AP 1 and wait for the time Tw starting from a time the response frame is received. In other words, the STA 1 may determine whether a state maintenance condition(s) is satisfied for the time Tw. A frame (e.g., data) to be transmitted to the AP 1 may not be present in the STA 1. Accordingly, a MAC layer of the STA 1 may not deliver the PHY-TXSTART.request primitive to a PHY layer of the STA 1 for the time Tw. In this case, the PHY layer of the STA 1 may not deliver the PHY-TXSTART.confirm primitive, which is a response to the PHY-TXSTART.request primitive, to the MAC layer of the STA 1.

A frame (e.g., data) to be transmitted to the STA 1 may not be present in the AP 1 and/or another STA. Accordingly, the AP 1 and/or another STA may not transmit any frame to the STA 1, and the STA 1 may not receive any frame from the AP 1 and/or the another STA. When no frame is received, the PHY layer of the STA 1 may not generate the PHY-RXSTART.indication primitive. In other words, when no frame is received, the PHY-RXSTART.indication primitive may not occur in the PHY layer of the STA 1 for the time Tw. If neither Condition 1 nor Condition 2 is satisfied, the STA 1 may operate in the listening state after the time Tw. In other words, the operation state of the STA 1 may transition from the normal transmit/receive state to the listening state after the time Tw.

As another method, at a shared TXOP indicated by a MU-RTS frame of the AP 1, the STA 1 may not transition an operation state from a normal transmit/receive state to a listening state. In other words, the operation state of the STA 1 may be maintained as the normal transmit/receive state within the shared TXOP (e.g., within a time allocated by a MU-RTS TXS frame). After an end time of the shared TXOP, the STA 1 may transition the operation state from the normal transmit/receive state to the listening state. For example, when the AP 1 shares a TXOP with the STA 1, the STA 1 may operate as a TXOP owner within the shared TXOP. Alternatively, the STA 1 may operate similarly to a TXOP owner within the shared TXOP. In other words, just as the STA 1 obtains a TXOP, the STA 1 may operate in EMLSR mode within the shared TXOP. "The STA 1 operating in EMLSR mode" may mean that "the STA 1 does not return to the listening state". "The STA 1 operating in EMLSR mode" may mean that "the STA 1 operates in a state capable of transmitting and receiving a frame (e.g., the normal transmit/receive state)". When the STA 1 connected with the EMLSR STA MLD 1 obtains a TXOP, the STA 1 may perform a normal transmitting/receiving operation within the TXOP. In other words, the STA 1 may transmit/receive a frame within the TXOP.

For example, the STA 1 may receive a MU-RTS TXS frame from the AP 1 and transmit a CTS frame to the AP 1 as a response to the MU-RTS TXS frame. In this case, a TXOP of the AP 1 may be shared with the STA 1. The STA 1 may consider that a TXOP of the STA 1 is obtained within the shared TXOP (e.g., a time allocated by the MU-RTS TXS frame). The STA 1 may operate as a TXOP owner within the shared TXOP. Alternatively, the STA 1 may operate similarly to a TXOP owner within the shared TXOP. The STA 1 may perform a normal transmitting/receiving operation within the shared TXOP. The STA 1 may transmit a frame to the AP 1 and/or another STA within the shared TXOP. When the shared TXOP ends (e.g., expires, is interrupted), the STA 1 may transition the operation state from the normal transmit/receive state to the listening state. A time required for the STA 1 to transition the operation state from the normal transmit/receive state to the listening state may be the time Tt (e.g., a EMLSR transition delay time, a EMLSR padding delay time). The STA 1 may transmit a frame to the AP 1 that instructs to interrupt the shared TXOP midway. In the frame, a RDG/More PPDU subfield of a command and status (CAS) field of a A-control filed included in a MAC header may be set to 0. A recipient of the frame may be the AP 1. In other words, the shared TXOP may be terminated midway. The STA 1 may transition the operation state to the listening state in the time Tt after a time a frame (e.g., a BA frame) is received as a response to the frame transmitted to the AP 1. As another method, the STA 1 may not have to receive a frame as a response to the frame transmitted to the AP 1. In this case, the STA 1 may transition the operation state from the normal transmit/receive state to the listening state after the time Tt (e.g., EMLSR transition delay time, EMLSR padding delay time) starting from a transmission time of the frame (e.g., a transmission end time).

The AP MLD 1 may transmit a TXS frame and/or an initial control frame (e.g., a MU-RTS frame, a MU-RTS trigger frame, a MU-RTS TXS frame) to the STA 1 of the STA MLD 1. Then, the AP MLD 1 may not transmit the initial control frame to the STA 2 of the STA MLD 1 by using an EMLSR link(s) (e.g., the second link) within a shared TXOP indicated by the MU-RTS frame.

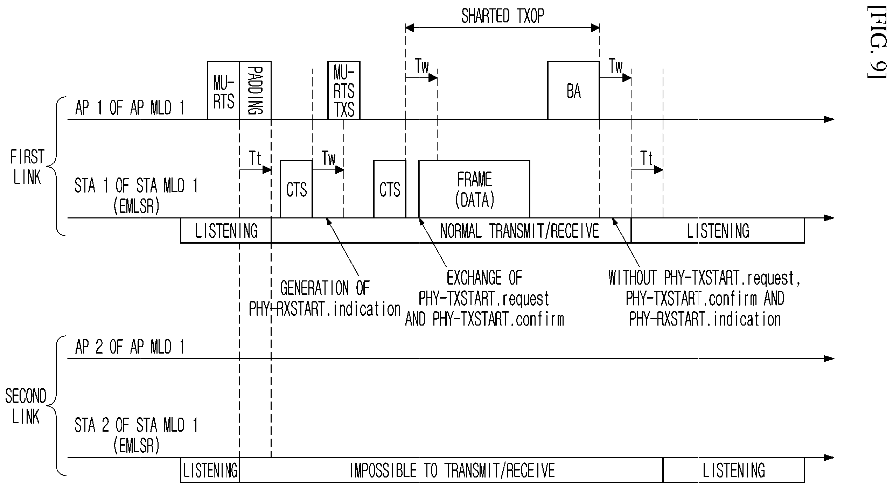

FIG. 9 is a timing diagram illustrating a seventh embodiment of a communication method of an EMLSR STA.

Referring to FIG. 9, a wireless LAN may support a multi-link operation. An AP MLD 1 and/or an STA MLD 1 may operate on multiple links (e.g., a first link and a second link). An AP connected with the AP MLD 1 operating on the first link may be referred to as an AP 1. An AP connected with the AP MLD 1 operating on the first link may be referred to as an AP 2. An STA connected with the STA MLD 1 operating on the first link may be referred to as an STA 1. An STA connected with the STA MLD 1 operating on the first link may be referred to as an STA 2. The STA MLD 1 may support an EMLSR operation (e.g., an MLSR operation). In other words, the STA MLD 1 may be an EMLSR STA MLD (e.g., an MLSR STA MLD). The STA MLD 1 may perform an EMLSR operation on multiple links (e.g., the first link and the second link). An STA connected with the STA MLD 1 on each link may be referred to as an EMLSR STA. The STA 1 operating on the first link may be referred to as an EMLSR STA 1, and the STA 2 operating on the second link may be referred to as an EMLSR STA 2.

An EMLSR STA MLD may initiate or terminate an EMLSR operation (or EMLSR mode) by exchanging an enhanced multi-link (EML) operating mode notification (OMN) frame with an AP MLD. Before the EMLSR mode is initiated or terminated, one STA of the STA 1 or the STA 2 may perform a normal transmit/receive operation and/or a listening operation by using one transceiver (e.g., one radio) at a preset time. The STA 1 and the STA 2 may be incapable of simultaneously performing a normal transmit/receive operation.

When the EMLSR STA MLD initiates the EMLSR mode through exchange of the EML OMN frame, the EMLSR STA MLD may operate in the EMLSR mode on EMLSR links that are negotiated between the EMLSR STA MLD and the AP MLD. In other words, the EMLSR STA MLD may perform an EMLSR operation on the EMLSR links. In the EMLSR mode, the EMLSR STA MLD (e.g., EMLSR STA) may perform a listening operation or a normal transmit/receive operation. The EMLSR STA MLD may perform the listening operation to receive a frame (e.g., an initial control frame) with a predefined format on EMLSR links.

When the initial control frame is received, the EMLSR STA MLD may transition all receiving radios (e.g., all receiving antennas) or all transmitting/receiving radios (e.g., all transmitting/receiving antennas) operating on links other than the link, on which the initial control frame is received, to the link on which the initial control frame is received, and perform a normal transmit/receive operation on the link on which the initial control frame is received. In other words, the EMLSR STA MLD may transmit/receive a frame with an AP MLD on the link on which the initial control frame is received. When the EMLSR STA MLD wants to transmit a frame to the AP MLD, the EMLSR STA MLD may transition all radios to one link among EMLSR links and transmit the frame to the AP MLD by using radios (e.g., all the radios) on the one link.

The STA 1 may perform a normal transmit/receive operation and a listening operation. A state of performing a normal transmit/receive operation may be referred to as a normal transmit/receive state. A state of performing a listening operation may be referred to as a listening state. When a normal transmit/receive operation is performed, the STA 1 may perform a transmit/receive operation for all frames. In other words, the STA 1 operating in the normal transmit/receive state may perform communication on one link (e.g., the first link). When a listening operation is performed, the STA 1 may receive only a frame with a predefined format. In other words, the STA 1 operating in the listening state may perform a listening operation to receive the frame on an EMLSR link(s). A frame with a predefined format may be an initial control frame. The initial control frame may be a MU-RTS frame or a BSRP trigger frame.

When an operation state of the STA 1 is a listening state, the STA 2 connected to the EMLSR STA MLD 1 may perform a listening operation. When the operation state of the STA 1 is a normal transmit/receive state, an operation state of the STA 2 connected to the EMLSR STA MLD 1 may be a state incapable of transmission/reception. In the state incapable of transmission/reception, the STA 2 may not be able to transmit/receive a frame. When the STA 1 transitions from a listening state to a normal transmit/receive state, the STA 2 may be in a state in capable of transmission/reception. For a time required for transitioning from the normal transmit/receive state to the listening state (e.g., Tt time), the STA 2 may be in a state incapable of transmission/reception. A change of an operation state may be applied likewise to the STA 1 and the STA 2 (e.g., STAs connected with a same EMLSR STA MLD). For example, if the STA 2 is in a listening state, the STA 1 may be in the listening state. If the STA 2 is in a normal transmit/receive state, the STA 1 may be in a state incapable of transmission/reception.

On the first link, the AP 1 may configure (e.g., obtain, initiate) a TXOP before performing a transmit opportunity (TXOP) sharing operation. The TXOP may be configured (e.g., obtained, initiated), when "the AP 1 performs a procedure of exchanging a RTS frame and a clear to send (CTS) frame", "the AP 1 transmits a CTS-to-self frame" and/or "the AP1 transmits a data frame". As another method, the AP1 may configure the TXOP by performing "an operation of transmitting a TXOP sharing (TXS) operation" and/or "an operation of transmitting an initial control frame (e.g., an MU-RTS frame, an MU-RTS trigger frame, an MU-RTS TXS frame) and an operation of receiving a CTS frame".

Within the TXOP configured on the first link, the AP 1 may transmit the MU-RTS frame to the STA 1 (e.g., an EMLSR STA) without performing a channel contention procedure. The MU-RTS frame may be an initial control frame of an EMLSR operation. The MU-RTS frame may be a frame indicating a TXOP sharing operation (e.g., an MU-RTS TXS frame). The STA 1 may not decode the MU-RTS frame indicating TXOP sharing (e.g., a content of the MU-RTS frame). According to a MU-RTS frame, which the AP 1 first transmits to the STA 1, may be a basic MU-RTS frame not indicating TXOP sharing (e.g., a TXOP sharing operation) (e.g., a basic variant MU-RTS frame, a MU-RTS frame that is not a TXS frame). A user info field included in the basic MU-RTS frame may indicate a STA (e.g., one STA) that is a recipient of the basic MU-RTS frame). A common info field of the basic MU-RTS frame may not include a triggered TXOP sharing mode subfield. Alternatively, the common info field of the basic MU-RTS frame may include a triggered TXOP sharing mode subfield, and a value of the triggered TXOP sharing mode subfield may be set to 0.

An EMLSR STA operating in an EMLSR mode may receive an initial control frame during a listening operation. In this case, in order to perform a normal transmit/receive operation on a link on which the initial control frame is received, the EMLSR STA may transition receiving radio(s) from links other than the link on which the initial control frame is received to the link on which the initial control frame is received. A time required for transitioning the receiving radio(s) may be a time Tt. A time required for transitioning from a normal transmit/receive state to a listening state may be the time Tt. The time Tt may be an EMLSR transition delay or an EMLSR padding delay.

A MU-RTS frame, which is an initial control frame, may indicate TXOP sharing. A length of padding included in the MU-RTS frame should be longer than a length corresponding to the time Tt that is required for transitioning an operation state of an EMLSR STA from a listening state to a normal transmit/receive state. Accordingly, in order to make the length of padding included in the MU-RTS frame equal to or longer than the length corresponding to the time Tt, the MU-RTS frame may include padding bits (e.g., a padding bit). The STA 1 may receive a MU-RTS frame from the AP 1. The padding bit may be a bit for increasing a time length of a frame. When the MU-RTS frame of the AP 1 is received, the STA 1 may transition an operation state from a listening state to a normal transmit/receive state.

The STA 1 may transmit a CTS frame to the AP 1 after a short interframe space (SIFS) following a reception time (e.g., a reception end time) of the MU-RTS frame of the AP 1. The STA 1 may confirm that a medium access control (MAC) primitive and/or a PHY primitive occurs during a time Tw from a transmission time (e.g., a transmission end time) of the CTS frame. An operation of the STA 1 based on a primitive(s) (e.g., a MAC primitive and/or a PHY primitive), which occurs during the time Tw, may be performed based on the following condition(s). The time Tw may be aSIFSTime + aSlotTime + aRxPHYStartDelay.

The AP 1 may receive a CTS frame from the STA 1 and transmit a second MU-RTS frame to the STA 1. The second MU-RTS frame may be transmitted within the time Tw. The STA 1 may receive the second MU-RTS frame of the AP 1. When the second MU-RTS frame of the AP 1 is received, the STA 1 (e.g., a PHY layer of the STA 1) may generate the PHY-RXSTART. indication primitive. In this case, Condition 0 below is satisfied, so the STA 1 may maintain the normal transmit/receive state. In other words, the STA 1 may not transition the operation state from the normal transmit/receive state to the listening state.
- **Condition 0:** A PHY-RXSTART.indication primitive occurs within the time Tw at a PHY layer of the STA 1.

The second MU-RTS frame of the AP 1 may be a frame (e.g., a MU-RTS TXS frame) indicating TXOP sharing (e.g., a TXOP sharing operation). A TXOP sharing operation may be a triggered TXOP sharing operation. For example, the AP 1 may share part or all of TXOP with the STA 1. A TXOP sharing mode may be 1 or 2. The TXOP sharing mode may indicate that "the STA 1 can perform uplink communication for the AP 1". The TXOP sharing mode 2 may indicate that "the STA 1 can perform uplink communication for the AP 1 and/or communication for another STA (e.g., direct communication, P2P communication)".

The STA 1 may decode the MU-RTS frame of the AP 1 and confirm that the AP 1 performs TXOP sharing, based on a decoding result (e.g., information element(s) included in the MU-RTS frame (e.g., field(s))). For example, the STA 1 may identify a time indicated by an allocation duration subfield of the MU-RTS frame and identify a TXOP length shared by the AP 1 based on the identified time. The shared TXOP length or/and shared TXOP may be referred to as a time allocated by the MU-RTS TXS trigger frame. The STA 1 may transmit a CTS frame to the AP 1 after a short interframe space (SIFS) following a reception time (e.g., a reception end time) of the MU-RTS frame of the AP 1. The STA 1 may confirm that a medium access control (MAC) primitive and/or a PHY primitive occurs during a time Tw from a transmission time (e.g., a transmission end time) of the CTS frame. An operation of the STA 1 based on a primitive(s) (e.g., a MAC primitive and/or a PHY primitive), which occurs during the time Tw, may be performed based on the following condition(s). The time Tw may be aSIFSTime + aSlotTime + aRxPHYStartDelay.

If one or more of the following conditions are satisfied during the Tw time, the STA 1 may not transition an operation state from a normal transmit/receive state to a listening state.
- **Condition 1:** A PHY-RXSTART.indication primitive occurs at a PHY layer of the STA 1.
- **Condition 2:** A MAC layer of the STA 1 delivers the PHY-RXSTART.indication primitive to the PHY layer of the STA 1, and the PHY layer delivers a PHY-TXSTART.confirm primitive to the MAC layer as a response to the request (e.g., PHY-TXSTART.request primitive).

If neither Condition 1 nor Condition 2 is satisfied, the STA 1 may transition an operation state from a normal transmit/receive state to a listening state. Each of Condition 1 and Condition 2 may be a state maintenance condition (or state transition condition). If a state maintenance condition (e.g., at least one state maintenance condition) is satisfied for a preset time (e.g., the time Tw), the STA 1 may maintain a current operation state (e.g., a normal transmit/receive state). If a state maintenance condition (e.g., all the state maintenance conditions) is not satisfied for a preset time (e.g., the time Tw), the STA 1 may transition the current operation state. Herein, the STA 1 may transition the operation state from the normal transmit/receive state to a listening state. Condition 1 may mean "a condition for the STA 1 to receive a frame from another communication node (e.g., the AP 1 or another STA)". Condition 2 may mean "a condition for a frame to be transmitted to another communication node (e.g., the AP 1 or another STA) to occur at the STA 1".

The STA 1 may transit a frame within the shared TXOP. Within the shared TXOP, the STA 1 may perform a same operation as or a similar operation to a STA in the embodiments of FIG. 3 to FIG. 8 (e.g., STA MLD 1, STA 1).

The AP MLD 1 may transmit a TXS frame and/or an initial control frame (e.g., a MU-RTS frame, a MU-RTS trigger frame, a MU-RTS TXS frame) to the STA 1 of the STA MLD 1. Then, the AP MLD 1 may not transmit the initial control frame to the STA 2 of the STA MLD 1 by using an EMLSR link(s) (e.g., the second link) within a shared TXOP indicated by the MU-RTS frame.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

In addition, the computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device (e.g., a field-programmable gate array) may be used to perform some or all of functions of the methods described herein. In some exemplary embodiments, the field-programmable gate array may be operated with a microprocessor to perform one of the methods described herein. In general, the methods are preferably performed by a certain hardware device.

While the present disclosure has been described above with reference to preferred embodiments of the present disclosure, those skilled in the art will understand that various modifications and variations may be made to the present disclosure without departing from the scope and spirit of the present disclosure, which are defined by the Claims appended hereto.

## Claims

1. A method of a first station (STA), the method comprising:
operating in a listening state on a first link;
receiving an initial control frame from a first access point (AP) on the first link;
transitioning an operation state of the first STA from the listening state to a normal transmit/receive state after receiving the initial control frame;
determining whether one or more state maintenance conditions are satisfied for a preset time; and
maintaining or transitioning the operation state of the first STA based on whether the one or more state maintenance conditions are satisfied.

2. The method of claim 1, wherein the one or more state maintenance conditions include at least one of a first condition or a second condition, the first condition is a "condition that the first STAreceives a frame from another communication node", and the second condition is a "condition that a frame to be transmitted to the another communication node occurs in the first STA".

3. The method of claim 1, wherein the one or more state maintenance conditions include at least one of a first condition or a second condition, the first condition means that "PHY-RXSTART.indication primitive occurs in a physical (PHY) layer of the first STA", and the second condition means that "a medium access control (MAC) layer of the first STA delivers PHY-TXSTART.request primitive to the PHY layer of the first STA and the PHY layer of the first STA delivers PHY-TXSTART.confirm primitive to the MAC layer as a response to the PHY-TXSTART.request primitive".

4. The method of claim 1, wherein when the one or more state maintenance conditions are satisfied, the first STA maintains the normal transmit/receive state, and when the one or more state maintenance conditions are not satisfied, the first STA transitions the operation state from the normal transmit/receive state to the listening state.

5. The method of claim 1, wherein the initial control frame indicates transmit opportunity (TXOP) sharing, and the first STA operating in the normal transmit/receive state performs communication within a shared TXOP according to the TXOP sharing.

6. The method of claim 5, wherein when a mode of the TXOP sharing is a TXOP sharing mode 1, the first STA performs communication with the first AP within the shared TXOP, and when the mode of the TXOP sharing is a TXOP sharing mode 2, the first STA performs communication with at least one of the first AP or another STA within the shared TXOP.

7. The method of claim 1, further comprising receiving a multi-user (Mu)-request to send (RTS) frame indicating the TXOP sharing from the first AP in the normal transmit/receive state,
wherein the first STA operating in the normal transmit/receive state performs communication within the shared TXOP according to the TXOP sharing.

8. The method of claim 1, further comprising transmitting a clear to send (CTS) frame to the first AP as a response to the initial control frame on the first link,
wherein the preset time starts from a transmission end time of the CTS frame.

9. The method of claim 8, wherein the preset time is aSIFSTime + aSlotTime + aRxPHYStartDelay.

10. The method of claim 1, wherein in the listening state, the first STA performs a listening operation to receive a frame on one or more enhanced multi-link single radio (EMLSR) links, and in the normal transmit/receive state, the first STA performs communication on one link.

11. A first station (STA) comprising at least one processor,
wherein the at least one processor causes the first STA to:
operate in a listening state on a first link,
receive an initial control frame from a first access point (AP) on the first link,
transition an operation state of the first STA from the listening state to a normal transmit/receive state after receiving the initial control frame,
determine whether one or more state maintenance conditions are satisfied for a preset time, and
maintain or transition the operation state of the first STA based on whether the one or more state maintenance conditions are satisfied.

12. The first STA of claim 11, wherein the one or more state maintenance conditions include at least one of a first condition or a second condition, the first condition is a "condition that the first STA receives a frame from another communication node", and the second condition is a "condition that a frame to be transmitted to the another communication node occurs in the first STA".

13. The first STA of claim 11, wherein the one or more state maintenance conditions include at least one of a first condition or a second condition, the first condition means that "PHY-RXSTART.indication primitive occurs in a physical (PHY) layer of the first STA", and the second condition means that "a medium access control (MAC) layer of the first STA delivers PHY-TXSTART.request primitive to the PHY layer of the first STA and the PHY layer of the first STA delivers PHY-TXSTART.confirm primitive to the MAC layer as a response to the PHY-TXSTART.request primitive".

14. The first STA of claim 11, wherein when the one or more state maintenance conditions are satisfied, the first STA maintains the normal transmit/receive state, and when the one or more state maintenance conditions are not satisfied, the first STA transitions the operation state from the normal transmit/receive state to the listening state.

15. The first STA of claim 11, wherein the initial control frame indicates transmit opportunity (TXOP) sharing, and the first STA operating in the normal transmit/receive state performs communication within a shared TXOP according to the TXOP sharing.

16. The first STA of claim 15, wherein when a mode of the TXOP sharing is a TXOP sharing mode 1, the first STA performs communication with the first AP within the shared TXOP, and when the mode of the TXOP sharing is a TXOP sharing mode 2, the first STA performs communication with at least one of the first AP or another STA within the shared TXOP.

17. The first STA of claim 11, wherein the at least one processor further causes the first STA to receive a multi-user (Mu)-request to send (RTS) frame indicating the TXOP sharing from the first AP in the normal transmit/receive state, and
wherein the first STA operating in the normal transmit/receive state performs communication within the shared TXOP according to the TXOP sharing.

18. The first STA of claim 11, wherein the at least one processor further causes the first STA to transmit a clear to send (CTS) frame to the first AP as a response to the initial control frame on the first link, and
wherein the preset time starts from a transmission end time of the CTS frame.

19. The first STA of claim 18, wherein the preset time is aSIFSTime + aSlotTime + aRxPHYStartDelay.

20. The first STA of claim 11, wherein in the listening state, the first STA performs a listening operation to receive a frame on one or more enhanced multi-link single radio (EMLSR) links, and in the normal transmit/receive state, the first STA performs communication on one link.
